# EUROPEAN PATENT SPECIFICATION

(11) **EP 0 690 214 B1**
(45) Date of publication and mention of the grant of the patent: **10.02.1999**
(21) Application number: 95108389.8
(22) Date of filing: 31.05.1995
(51) Int. Cl.: F02B 29/00

(54) **Internal combustion engine**
Brennkraftmaschine
Moteur à combustion interne

(30) Priority: 31.05.1994 JP 118269/94; 15.11.1994 JP 280188/94
(43) Date of publication of application: 03.01.1996
(73) Proprietor: YAMAHA HATSUDOKI KABUSHIKI KAISHA, Iwata-shi Shizuoka-ken, 438 (JP)
(72) Inventor: Sawai, Seiji, c/o Yamaha Hatsudoki K.K., Iwata-shi, Shizuoka-ken (JP); Nakajima, Kunihiko, c/o Yamaha Hatsudoki K.K., Iwata-shi, Shizuoka-ken (JP); Watase, Jiro, c/o Yamaha Hatsudoki K.K., Iwata-shi, Shizuoka-ken (JP)
(74) Representative: Grünecker, Kinkeldey, Stockmair & Schwanhäusser Anwaltssozietät

(56) References cited:
- EP-A- 0 194 503
- EP-A- 0 344 780
- FR-A- 1 517 920
- FR-A- 2 439 300
- US-A- 4 986 225
- PATENT ABSTRACTS OF JAPAN vol. 012 no. 424 (M-761) ,10 November 1988 & JP-A-63 159618 (MAZDA MOTOR CORP) 2 July 1988,
- PATENT ABSTRACTS OF JAPAN vol. 008 no. 258 (M-340) ,27 November 1984 & JP-A-59 131724 (NIPPON DENSO KK) 28 July 1984,
- PATENT ABSTRACTS OF JAPAN vol. 010 no. 109 (M-472) ,23 April 1986 & JP-A-60 240822 (MAZDA KK) 29 November 1985,

## Description

This invention relates to an internal combustion engine of the four cycle type, comprising a cylinder having a cylinder bore with a piston slidably received therein to define a combustion chamber, an intake passage arrangement for supplying air into said combustion chamber and an exhaust passage arrangement for discharging combustion gas from said combustion chamber, at least one intake valve and one exhaust valve for opening and closing the communication of said intake and exhaust passage arrangements with said combustion chamber, said intake passage arrangement being provided with a second control valve means disposed upstream from said intake valve, for opening and closing the intake passage arrangement at least partially, said second control valve means being opened and closed substantially anti-cyclically with respect to the intake valve, i.e. said second control valve means being opened when said intake valve being closed and being closed when said intake valve being opened, a first control valve means being provided for varying the volume of a portion of the intake passage arrangement upstream from said intake valve and downstream from said second control valve means.

In the 4-cycle engine, it is inevitable that the work for exchanging the combustion gas for a new charge (work for discharge and intake) occurs as the so-called pumping loss at the end of each cycle. The pumping loss reduces thermal efficiency of the engine and prevents fuel economy from being improved. In particular in the low load operation range, since the amount of intake is reduced by throttling, the discharge work reduces. On the other hand, the pumping loss increases because of a reduced pressure in the intake passage.

The so-called Miller cycle is proposed to reduce the pumping loss due to the negative pressure in the low load operation range.

The Miller cycle engine is the engine of a reduced pumping loss and increased thermal efficiency in which the intake port is closed in the middle of the intake stroke (realizing an early ending of the intake) to shorten the intake stroke, and the air taken into the cylinder before the piston reaches the bottom dead center (B.D.C.) is made to expand to realize a refrigeration cycle. As a result, the pumping loss is reduced to improve thermal efficiency.

Various improvements of this type of Miller cycle engine have so far been proposed.

In one of such improvements (Refer to Tokkai Hei 63-45490), a first intake passage and a second intake passage are disposed parallel to each other at an intake port, and the first intake passage is provided with a first control valve (a second throttle valve), and the second intake passage is provided with a second control valve (a timing valve). The first control valve is closed at a low load and opened as the load increases. The second control valve is opened before the intake valve is opened, and closed before the intake valve is closed.

With the intake system of the above proposal, however, the pumping loss increases because a negative intake pressure is produced as the intake passage is contracted by the second control valve which is closed in the middle of the intake stroke at a low load.

In view of the above, another proposal is made (Tokkai Hei 1-305125) which does not control the amount of air by closing the second control valve in the middle of the intake stroke but supplies a suitable amount of air on the upstream side of the intake valve before the intake valve opens.

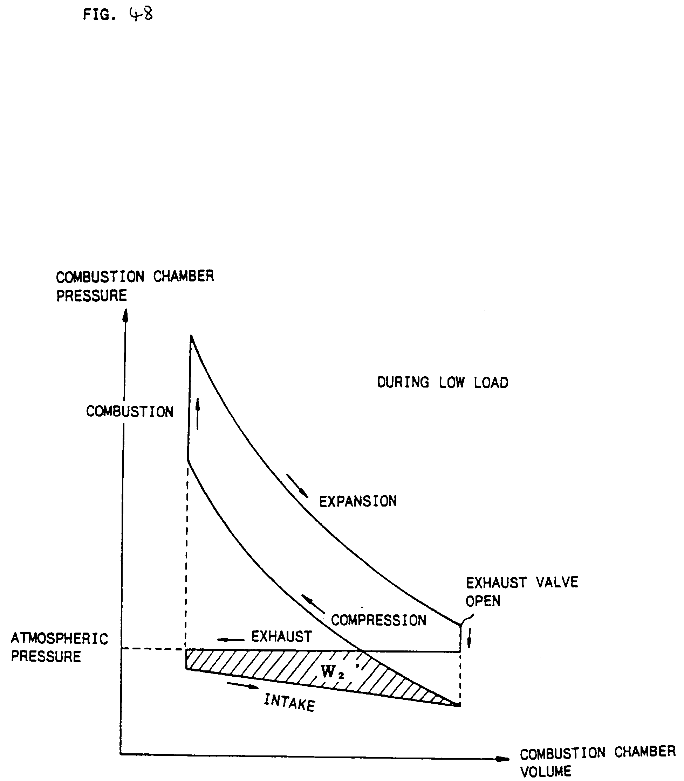

In the intake control system described above, however, as shown in the pressure indicator diagram of FIG. 48, the pressure on the upstream side of the intake valve before the opening of the intake valve is negative. As a result, there ia a problem of the pumping loss W₂' shown with hatching in FIG. 48 tending to increase at a low load.

An internal combustion engine as indicated above is known from FR-A-2439300. However, this further known internal combustion engine has the same problems as indicated in Fig. 48.

Accordingly, it is an objective of the present invention to provide an internal combustion engine as indicated above having a minimized pumping loss at least under low load engine running conditions and being capable of always supplying an appropriate amount of air so as to improve thermal efficiency and fuel economy of the engine.

According to the present invention, this objective is performed for an internal combustion engine as indicated above in that said intake passage arrangement comprises a first intake passage communicated with the combustion chamber via the intake valve and a second intake passage being communicated with said first intake passage upstream from said intake valve, said second control valve means is provided for opening and closing the second intake passage opening into said first intake passage, said first control valve means is provided for varying the volume of said portion of the first intake passage including the communication thereof with said second intake passage in response to an accelerator operation for controlling the engine, said first control valve means is adjustable between positions for defining a low volume of said portion of the first intake passage for low load conditions of the engine, and positions for defining a large volume of said intake passage portion for intermediate engine load conditions, and a position for communicating the first intake passage with the surrounding in parallel with the second intake passage or for communicating the first intake passage with a first intake chamber, whereas the second intake passage communicates with a separate second intake chamber, for high engine load conditions.

At least under low load conditions, external air of about atmospheric pressure is supplied through said control valve means into the intake passage portion between said control means and the intake valve. As a result, when the intake valve is opened during the intake stroke, the air of about atmospheric pressure supplied from outside is drawn into the cylinder of the engine. Since the pressure on the upstream side of the intake valve is kept at about atmospheric pressure before the intake valve is opened, the pumping loss is minimised and thermal efficiency and fuel economy of the engine are improved. Moreover, the variation of the volume of said intake passage portion permits to supply exactly the amount of air that is necessary so that the engine runs in a stabilised manner with high thermal efficiency and fuel economy.

Further, the invention permits to adjust the amount of air supplied to the combustion chamber in response to the acceleration operation to control the engine.

In addition, the invention assures that sufficient air can be supplied to the combustion chamber under high load conditions so as to increase the maximum performance of the engine.

Thereby, at least under low load operation conditions, said second control valve means is in its closing position when the intake valve is open and in its open position either constantly or for a period corresponding to a predetermined crankshaft rotation angle when the intake valve is closed.

According to another preferred embodiment of the invention, a third control valve is provided in the second intake passage upstream from the second control valve means for controlling the flow of air through said second intake passage in response to the accelerator operation for controlling the engine. Particularly in the low load range including idling, the amount of air supplied to the intake passage portion between the intake valve and the first and second control valve means can be prevented from becoming excessive and the amount of air supplied to the combustion chamber is optimised even when the minimum volume of said intake passage portion cannot be made small enough for structural reasons.

According to another preferred embodiment of the present invention, the second control valve is closed when the pressure of air supplied from outside to said intake passage portion through said second control valve reaches its maximum positive value. Accordingly, the intake pressure at the start of the intake stroke is increased and the pumping losses further minimised.

According to yet another preferred embodiment of the invention, a fuel injection device is provided for injecting fuel, preferably into the first intake passage downstream from the first control valve means and preferably when the intake valve and the second control valve means are in their closing positions, at least during load low operation conditions. After a preceding intake cycle, when both valves are closed, the fuel is injected into the low pressure mixture remaining in the intake passage portion between the intake valve and the control valve means. After the injected fuel and the remaining mixture are mixed together and rich mixture is produced, the second control valve is opened and external air of about atmospheric pressure is introduced into said intake passage portion so that the air in said intake passage portion is subjected to rapid adiabatic compression so that the temperature of the mixture raises to accelerate the evaporation of fuel in the mixture and enhance thermal efficiency.

According to another preferred embodiment of the present invention, a third intake passage is provided for supplying intake air to a fuel injection portion of said fuel injection device. Preferably, a fourth control valve is provided in said third intake passage for controlling the air flow therethrough. That permits to maintain a high thermal efficiency of the engine by minimising the pumping loss thereof, while the fuel evaporation can be accelerated and improved.

Further preferred embodiments of the present invention are laid down in further dependent claims.

Hereinafter, the present invention will be explained and illustrated in greater detail by means of preferred embodiments thereof in conjunction with accompanying drawings, in which:
Figure 1 is a schematic cross-section of a basic structure of an intake control system of an internal combustion engine according to a first embodiment of the present invention,
Figure 2 is a diagram showing the change in a first control valve travel relative to the accelerator opening,
Figure 3 is a pressure indicator diagram for the low load range of an engine provided with an intake control system according to the first embodiment of the invention,
Figure 4 is a cross-sectional side view of an intake control valve system of an internal combustion engine according to a second embodiment of this invention,
Figure 5 is a cross-sectional plan view of the intake structure according to the second embodiment of the invention shown in figure 4,
Figure 6 is a cross-sectional plan view showing a drive arrangement of a third control valve of the intake control system shown in figure 5,
Figure 7 is a cross-sectional view taken along the line X-X in figure 6,
Figure 8 is a diagram showing the changes in the first control valve travel and the third control valve opening relative to the accelerator opening,
Figure 9 is a cross-sectional side view of an intake control system of an internal combustion engine according to a third embodiment of the present invention,
Figure 10 is a cross-sectional side view of an intake control system of an internal combustion engine according to a fourth embodiment of the present invention wherein a first and a second intake passage are communicated with a common intake chamber,
Figure 11 is a diagram showing the changes in openings of the first control valve and the third control valve of the intake control system according to the fourth embodiment shown in figure 10, relative to the accelerator opening,
Figure 12 is a cross-sectional side view of an intake control system of an internal combustion engine according to a fifth embodiment of the present invention,
Figure 13 is a cross-sectional side view of an intake control system of an internal combustion engine according to a sixth embodiment of the present invention,
Figure 14 is a diagram showing the changes in openings of the first and third control valves and the piston travel of a piston mechanism for varying the volume of the intake passage arrangement shown in figure 13 relative to the accelerator opening according to the sixth embodiment of the invention,
Figure 15 is a cross-sectional side view of an intake control system of an internal combustion engine according to the seventh embodiment of the present invention,
Figure 16 is a cross-sectional side view of an intake control system of an internal combustion engine according to the eighth embodiment of the present invention, wherein a rotary valve for varying the volume of a portion of the intake passage arrangement is provided,
Figure 17 is a diagram showing the changes in openings of the first control valve and the third control valve relative to the accelerator opening,
Figure 18 is a pressure indicator diagram for the low load range of an engine provided with a variable compression mechanism,
Figure 19 is a schematic cross-section of a basic structure of an intake control system of an internal combustion engine according to the ninth embodiment of the present invention wherein a control valve associated with a second intake passage is operated by a solenoid,
Figure 20 is a diagram showing the relationship between the first control valve travel and the second control valve opening operation relative to the accelerator opening,
Figure 21 is a diagram showing the changes in the opening areas of the intake valve and the second control valve relative to the crankshaft rotation angle,
Figure 22 is a pressure indicator diagram for the low load range of an engine provided with an intake control system according to the ninth embodiment of the present invention,
Figure 23 is a schematic cross-section of a basis structure of an intake control system of an internal combustion engine according to a tenth embodiment of the present invention, generally similar to figure 1, wherein a specific control system for the fuel injection is provided,
Figure 24 is an enlarged partial cross-sectional view of an intake control system for a four cycle engine according to the embodiment of figure 23,
Figure 25 is an enlarged partial cross-sectional view of a fuel injection device for a four-cycle engine according to the embodiment of figure 24,
Figure 26 is a graph showing openings of valves and intake pressure characteristics relative to a crankshaft rotation angle,
Figure 27 is a diagram showing the change in the first control valve travel relative to the accelerator opening according to the tenth embodiment of the preceding figures 23 to 26,
Figure 28 is a pressure indicator diagram for the low load range of an engine provided with the intake control system according to the tenth embodiment of the invention of figures 23 through 27,
Figure 29 is a cross-sectional side view of an intake control system of an internal combustion engine according to an eleventh embodiment of this invention,
Figure 30 is a cross-sectional plan view of the intake structure of the engine according to the embodiment of figure 29,
Figure 31 is a cross-sectional plan view showing a drive arrangement for a third control valve according to the eleventh embodiment of the invention,
Figure 32 is a cross-sectional view taken along the line X-X in figure 28,
Figure 33 is a diagram showing the changes in the first control valve travel amount and the third control valve opening relative to the accelerator opening according to the eleventh embodiment of the preceding figures 29 through 32,
Figure 34 is a cross-sectional side view of an intake control system of an internal combustion engine according to a twelfth embodiment of the present invention,
Figure 35 is a cross-sectional side view of an intake control system of an internal combustion engine according to a thirteenth embodiment of the present invention,
Figure 36 is a diagram showing the changes in openings of the first control valve and a third control valve relative to the accelerator opening according to the embodiment of figure 35,
Figure 37 is a cross-sectional side view of an intake control system of an internal combustion engine according to a fourteenth embodiment of the present invention,
Figure 38 is a cross-sectional side view of an intake control system of an internal combustion engine according to a fifthteenth embodiment of the present invention,
Figure 39 is a diagram showing the changes in openings of the first and third control valves and the piston travel amount of a piston mechanism for varying the volume of an intake passage portion relative to the accelerator opening according to the embodiment of figure 38,
Figure 40 is a cross-sectional side view of an intake control system of an internal combustion engine according to a sixteenth embodiment of this invention,
Figure 41 is a cross-sectional side view of an intake control system of an internal combustion engine according to a seventeenth embodiment of the present invention,
Figure 42 is a diagram showing the changes in openings of the first control valve and the third control valve of the internal combustion engine according to the embodiment of figure 41 relative to the accelerator opening,

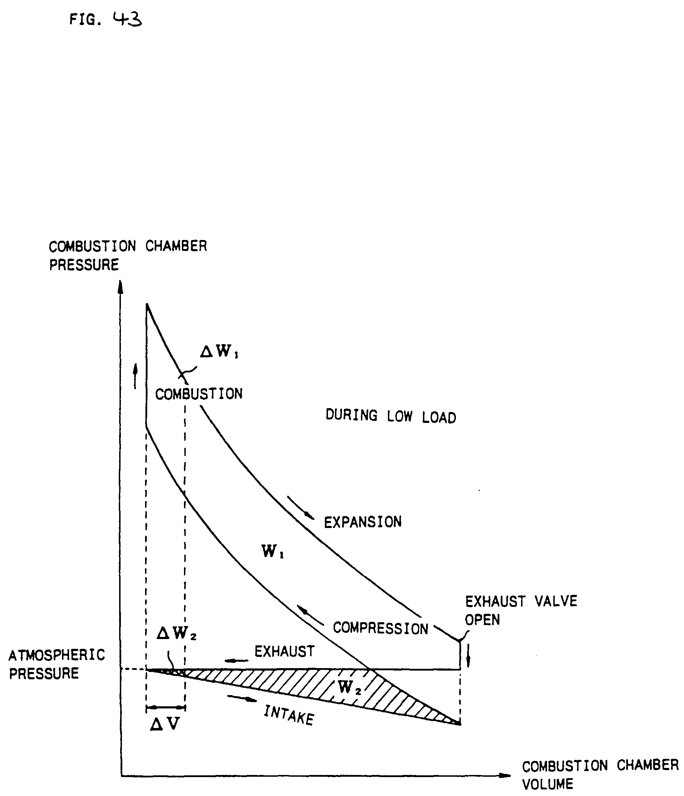

Figure 43 is a pressure indicator diagram for the low load range of an engine provided with a variable compression mechanism,
Figure 44 is a schematic cross-sectional view of a basic structure of an intake control system of an internal combustion engine according to an eighteenth embodiment of the present invention,
Figure 45 is a diagram showing the relationship between the first control valve travel and the second control valve opening duration relative to the accelerator opening according to the embodiment of the preceding figure,
Figure 46 is a diagram showing the changes in the opening areas of the intake valve and the second control valve relative to a crankshaft rotation angle,
Figure 47 is a pressure indicator diagram in the low load range of the internal combustion engine having the intake control system according to the eighteenth embodiment of the present invention according to figures 44 through 47, and
Figure 48 is a pressure indicator diagram for the low load range of an internal combustion engine having a conventional intake control system.

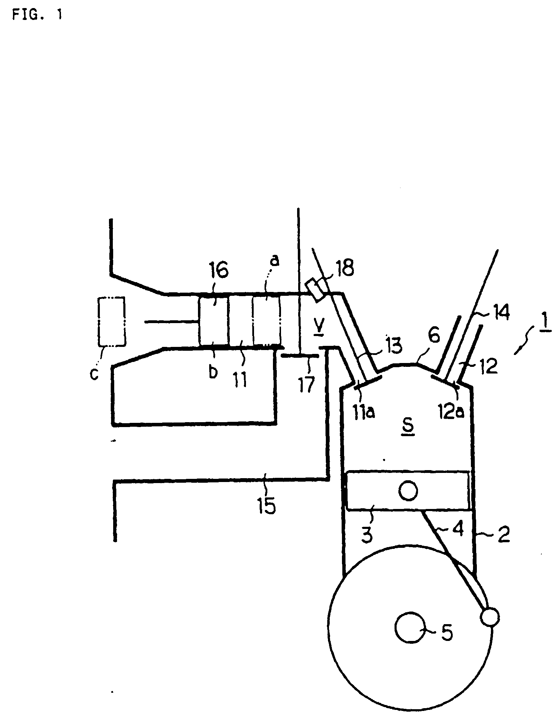

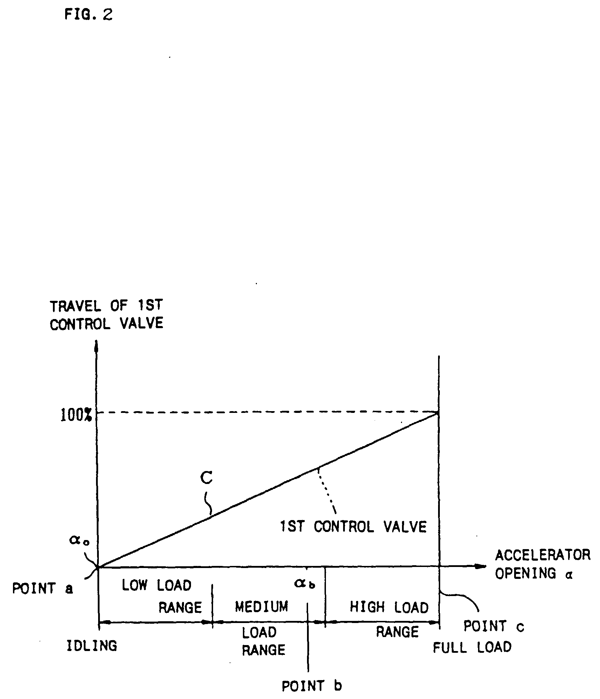

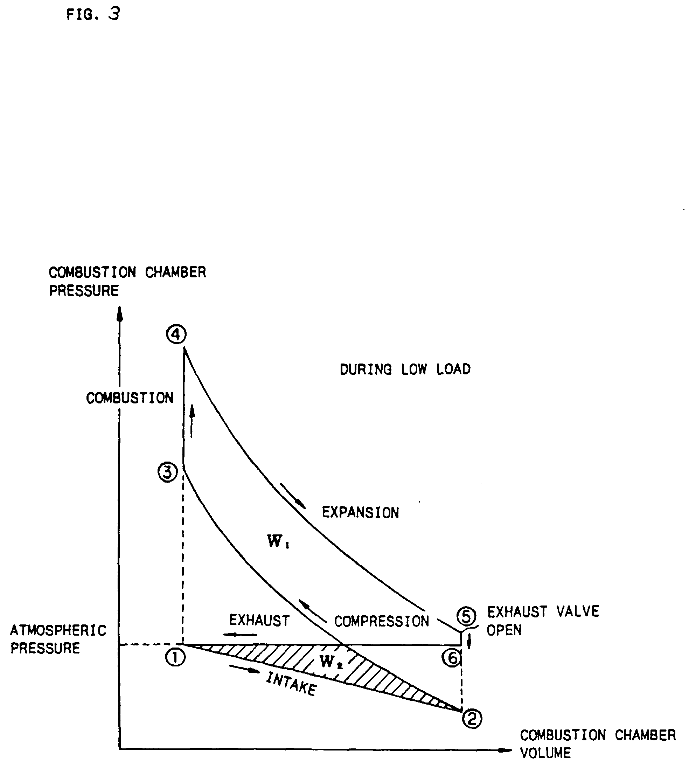

FIG. 1 is a schematic cross section of a basic structure of an intake control system according to the first embodiment of this invention. FIG. 2 is a graph showing the change in the stroke of the first control valve relative to the accelerator opening. FIG. 3 is a pressure indicator diagram of an engine at a low load.

In FIG. 1, a 4-cycle engine 1 comprises a cylinder 2, a piston 3 fit in the cylinder 2 for vertical reciprocal sliding, and a connecting rod 4 connecting the piston 3 to a crankshaft 5.

A first intake passage 11 for introducing external air into a combustion chamber S and an exhaust passage 12 for discharging combustion gas (exhaust gas) produced by combustion of mixture in the combustion chamber S are connected to a cylinder head 6 attached to the top of the cylinder 2 of the engine 1. The intake passage 11 and the exhaust passage 12 are open to the combustion chamber S through respective intake port 11a and an exhaust port 12a. The first intake port 11a and the exhaust port 12a are opened and closed respectively by an intake valve 13 and an exhaust valve 14 operated by a valve operating mechanism (not shown) at suitable timings.

Another, second intake passage 15 for introducing external air is connected to an intermediate position (near the intake valve 13) on the first intake passage 11.

The first intake passage 11 is provided with a first control valve 16 for sliding within the first intake passage 11 in interlocked motion with the operation amount of the accelerator device (not shown). A second control valve 17 is provided at the joint area between the first and second intake passages 11 and 15. A fuel injection device 18 is provided on the first intake passage 11.

The first control valve 16 is for changing the volume of a closed space in the first intake passage 11 between the first control valve 16 and the intake valve 13. The volume V is increased according to the increase in the accelerator operation amount (the accelerator opening or engine load) by sliding the valve 16 to the left as seen in FIG. 1. The second control valve 17, as will be described later, is constantly closed when the intake valve 13 is open at least at a low load, and open constantly or by an opening corresponding to a given crankshaft rotation angle when the intake valve 13 is closed.

Thus, the intake control device of this invention comprises the first intake passage 11, the intake valve 13, the second intake passage 15, the first and second control valves 16 and 17. Its function will be hereunder described in reference to FIGs. 2 and 3.

A 4-cycle engine of this invention completes its one cycle, as shown in a pressure indicator diagram of FIG. 3, through the intake stroke from (1) to (2), a compression stroke from (2) to (3), a combustion (explosion) stroke from (3) to (4), an expansion stroke from (4) to (5), and an exhaust stroke from (5) to (1). When the exhaust valve 14 opens at (5) to start the exhaust stroke from (5) to (1), exhaust gas blows out during the stroke from (5) to (6) in which the pressure in the combustion chamber S lowers down to the atmospheric pressure.

Referring to FIG. 2, the operation range (the range from idling to full load operation) of the engine 1 is divided into a low load range, medium load range, and a high load range with respect to the accelerator opening α. When the accelerator opening α is α₀ (idling), the first control valve 16 is kept inoperative. This state corresponds to the phantom lined position (a) in FIG. 1 and the closed space volume V in the first intake passage 11 is kept minimum.

In the engine 1 of this invention, when the intake valve 13 is closed at the end of a previous cycle and the compression stroke is started, the second control valve 17 opens as described above, and external air of about the atmospheric pressure is introduced in the closed space V in the first exhaust passage 11. Therefore, when the intake stroke of the current cycle is started with simultaneous opening of the intake valve 13 and closing of the exhaust valve 14 (the state of (1) in FIG. 3), the second control valve 17 is closed as described before, and external air of about the atmospheric pressure is contained in the closed space V. When mixture of a required air to fuel ratio is produced by injecting an appropriate amount of fuel into the air contained as described above, the fuel injection start timing is set either before or after the start timing of the opening of the intake valve 13 (this is also the case for other embodiments which will be described later).

When the piston 3 moves down in the cylinder 2, the mixture is drawn from the closed space V in the first intake passage 11 by vacuum produced in the cylinder 2 through the intake valve 13 into the cylinder 2.

The intake stroke is over when the piston 3 reaches the bottom dead center (B.D.C.) in the state of (2) in FIG. 3, and the compression stroke is started when the piston 3 moves up in the cylinder 2. In the compression stroke, the intake valve 13 which has been open is closed. The mixture drawn into the cylinder 2 is compressed by the ascending piston 3 to a high pressure as shown in FIG. 3, ignited by an ignition plug (not shown) immediately before the piston reaching the top dead center (T.D.C.), and the process moves on to the combustion stroke (from (3) to (4) in FIG. 3). When the intake valve 13 is closed as described above at the start of the compression stroke ((2) in FIG. 3), the second control valve 17 is opened, external air is supplied from the second intake passage 15 to the closed space V in the first intake passage 11, and drawn into the cylinder 2 during the intake stroke of the next cycle.

The high pressure combustion gas in the combustion chamber S produced by the combustion of the mixture during the combustion stroke pushes down the piston 3 as it expands (the expansion stroke from (4) to (5) in FIG. 3) and blows out with its own pressure (blow out of exhaust gas during the stroke from (5) to (6) in FIG. 3) when the exhaust valve 14 opens (point (5) in FIG. 3).

When the piston 3 starts moving up again after reaching the B.D.C., the combustion gas of about the atmospheric pressure remaining in the cylinder is pushed out by the ascending piston 3 to the exhaust passage 12 and discharged (the exhaust stroke from (6) to (7) in FIG. 3).

Thereafter the same strokes as those described above are repeated so that the engine 1 is operated continuously.

Since the work W₁ as shown in FIG. 3 is obtained during the one cycle of the compression, combustion, expansion, and exhaust strokes ((2),(3), (4), (5), (6) and (1) in FIG. 3) of the engine 1, and the work W₂ shown with hatching is lost as a pumping loss. Therefore, the indicated work Wᵢ is expressed by the equation below.$\text{(Equation 1)} {\text{W}}_{\text{i}} {\text{= W}}_{\text{1}} {\text{- W}}_{\text{2}}$

As evident from the above equation, the indicated work Wᵢ increases if the pumping loss W₂ decreases. As a result, thermal efficiency η of the engine 1 as expressed by the following equation (2) increases and the fuel economy is improved.$\text{(Equation 2)} {\text{η = A·W}}_{\text{i}} \text{/Q}$ where
- A: is the thermal equivalent of work, and
- Q: is the supplied heat.

In this embodiment, since the pressure in the closed space V formed on the upstream side of the intake valve 13 before it opens is kept at about the atmospheric pressure, as shown in FIG. 3, the intake stroke is started from about the atmospheric pressure ((1) in FIG. 3). As a result, with this embodiment, the pumping loss W₂ is made smaller in comparison to the pumping loss W₂' (FIG. 48) of the conventional intake stroke started from a negative pressure. As a result, the indicated work W₁ obtained from the equation (1) increases, the thermal efficiency η obtained from the equation (2) is enhanced, and the fuel economy is improved.

When it is intended to obtain a high power engine by setting a long period of time during which both the intake valve 13 and the exhaust valve 14 are open, since the pressure in the closed space V is kept at about the atmospheric pressure, exhaust gas is less likely to flow back into the first intake passage 11 even if both the intake valve 13 and the exhaust valve 14 are open. As a result, exhaust gas is not drawn back into the combustion chamber S to make idling operation unstable.

As described before, the first control valve 16 of this embodiment slides to the left as seen in FIG. 1 as the accelerator opening α increases. Namely, if the accelerator opening α increases beyond α₀ in FIG. 2 (α > α₀), the first control valve 16 slides in proportion to the accelerator opening α (along the line C in FIG. 2) within the first intake passage 11. As a result, at the accelerator opening α_{b} in a medium load range for instance, the first control valve 16 is at the solid line position (b), and at the phantom line position (c) at the full load so that the volume of the closed space V is further increased. Thus, since the volume of the closed space V (namely the amount of external air supplied into the closed space V) is increased or decreased according to the engine load, an exact amount of air corresponding to the accelerator operation amount is supplied from the closed space V into the combustion chamber S in the cylinder 2 in a stabilized manner.

In this embodiment, the first control valve 16 is out of the first intake passage 11 as shown in FIG. 1 in the high load range (especially at the full load). Under that condition, no closed space V is formed in the first intake passage 11 and the external air is directly introduced into the cylinder 2.

Next, specific examples of the intake control system of this invention with the basic principle described above in reference to the first embodiment will be hereunder described in reference to the second through ninth embodiments.

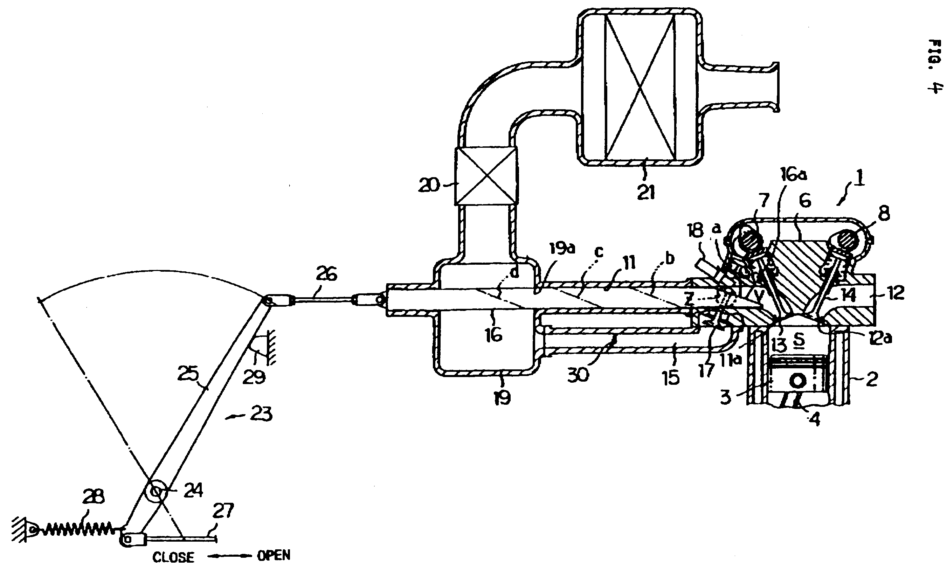

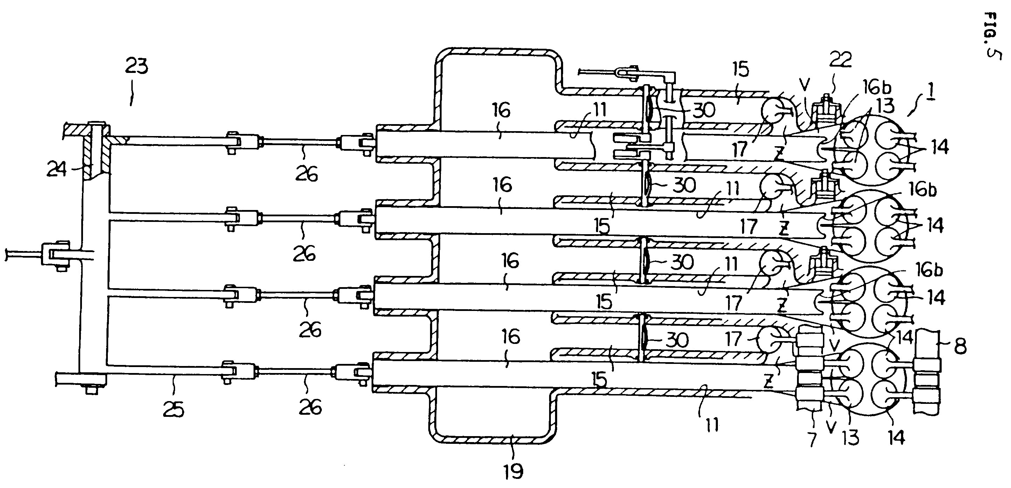

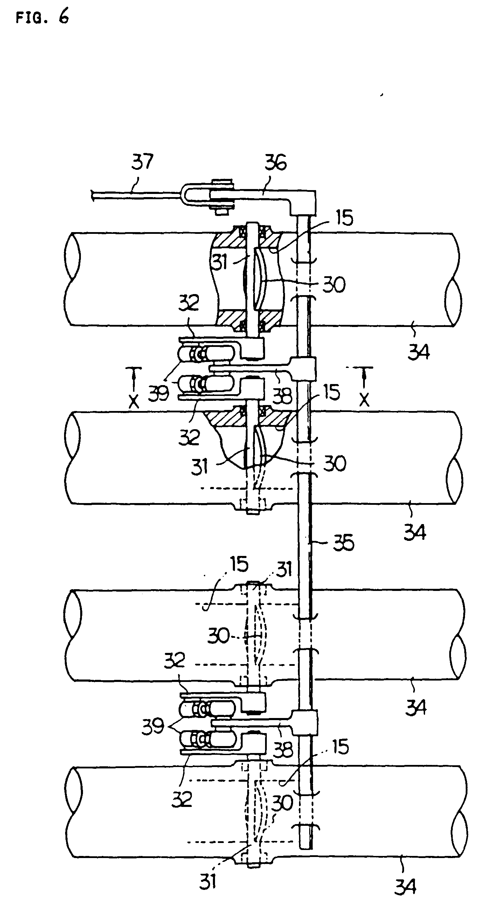

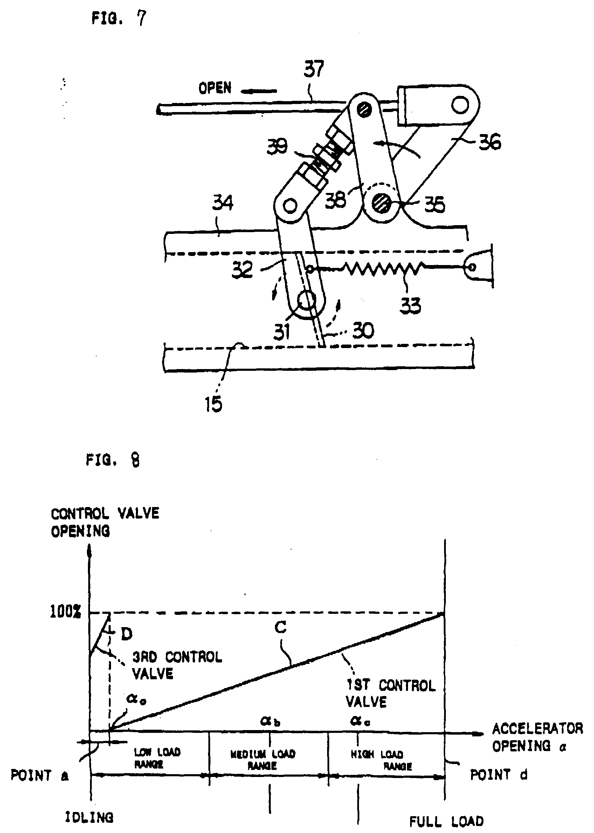

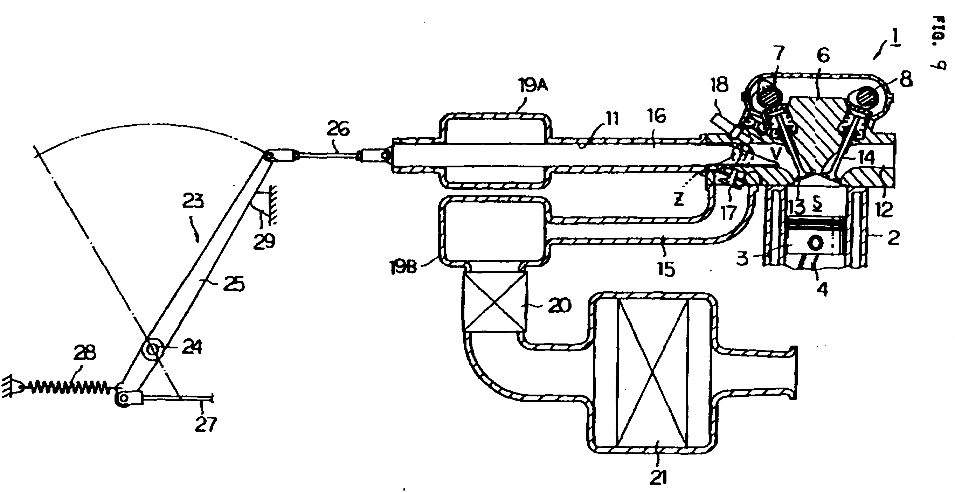

FIG. 4 is a side view in cross section of an intake control system as the second embodiment of this invention. FIG. 5 is a plan view in cross section of the same system. FIG. 6 is a plan view partially in cross section of a constitution of a drive system of a third control valve. FIG. 7 is a cross section taken along the line X-X in FIG. 6. FIG. 8 is a graph showing the changes in the first control valve travel and the third control valve opening relative to the accelerator opening.

The engine 1 of this embodiment is of an in line, four cylinder, four valve type, with each cylinder provided with the piston 3 for free vertical sliding and connected through the connecting rod 4 to the crankshaft (not shown).

FIG. 4 also shows the first intake passage 11 and the exhaust passage 12 provided similarly to the first embodiment for each cylinder. These passages are open to the combustion chamber S at an intake port 11a and an exhaust port 12a respectively opened and closed by the intake valve 13 and the exhaust valve 14 respectively driven by cam shafts 7 and 8 at appropriate timings.

Similarly to the first embodiment, another, second intake passage 15 for introducing external air is connected by way of a communication hole Z to an intermediate position (near the intake valve 13) on the first intake passage 11. A fuel injection device 18 is provided on the first intake passage 11 (cylinder head 6).

As shown in FIG. 4, the first and second intake passages 11 and 15 provided for each cylinder are connected to a common intake chamber 19 connected by way of an air flow meter 20 to an air filter 21.

A rod-shaped first control valve 16 is installed for free sliding in the first intake passage 11. One end of the first control valve 16 is formed as a tapered surface 16a and its other end extends through the intake chamber 19 to the outside. For each cylinder, a closed space V is formed in the first intake passage 11 between the first control valve 16 and the intake valve 13. As shown in FIG. 5, each fore-end 16a of the first control valve 16 is formed in a concave shape to minimize the volume of the closed space V. As also shown in FIG. 5, each first intake passage 11 (cylinder head 6) is provided on its side with an adjustment mechanism 22 for preliminary fine adjustment of the volume of the closed space V.

FIG. 4 also shows an accelerator device 23 having a lever 25 capable of rotating about a shaft 24, with the upper end of the lever 25 connected by way of a rod 26 to the end of the first control valve 16 extending outside the intake chamber 19.

The lever 25 is connected at its lower end by way of a rod 27 to an accelerator pedal (not shown) and urged to the closing side of the accelerator by a return spring 28. The numeral 29 in FIG. 4 denotes a stopper for restricting the rotation of the lever 29.

Similarly to the first embodiment, a second control valve 17 is provided at the joint area between the first and second intake passages 11 and 15. The second control valve 17 is driven by the cam shaft 7 and constantly closed when the intake valve 13 is open at least at a low load, and open constantly or by an opening corresponding to a given crankshaft rotation angle when the intake valve 13 is closed.

A third control valve 30 is provided in the middle of the second intake passage 15 (on the upstream side of the second control valve 17) so as to be driven in the low load range including idling (the range before the first control valve 16 is driven) so that its opening is changed according to the amount of accelerator operation (accelerator opening).

The constitution of the third control valve 30 will be hereunder described in reference to FIGs. 6 and 7.

One end of the valve shaft 31 of the third control valve 30 is connected to a lever 32 urged by a return spring 33 to the closing side of the third control valve 30.

A common rotary shaft 35 is supported for free rotation on four intake pipes 34 each constituting the second intake passage 15. One end of the rotary shaft 35 is connected to a lever 36 connected by way of a cable 37 to the accelerator pedal (not shown).

A lever 38 is connected at a position between two of the four intake pipes 34 as seen in FIG. 6 and another lever 38 is similarly connected at a position between the rest two intake pipes 34. Each of the levers 38 is connected to two opposing levers 32 by way of an adjustable rods 39.

Thus, the intake control device of this invention comprises the first intake passage 11, the intake valve 13, the second intake passage 15, the first and second control valves 16 and 17, and the third control valve 30. Its function will be hereunder described in reference to FIG. 8.

Referring to FIG. 8, the operation range of the engine 1 is divided into a low load range, medium load range, and a high load range with respect to the accelerator opening α. When the accelerator opening α is ≦ α₀ (α ≦ α₀) in the low load range, the first control valve 16 is kept inoperative, corresponding to the solid line position (a) in FIG. 4 and the closed space volume V in the first intake passage 11 is kept minimum. Also in this operation range, the opening of the third control valve 30 is controlled (along the line D in FIG. 8) by the accelerator opening α (engine load). The third control valve 30 as shown in FIG. 8 is open to some extent even during idling.

Also in the engine 1 of this embodiment, since the second control valve 17 opens as described above when the compression stroke is started when the intake valve 13 is closed, the external air of about the atmospheric pressure introduced by way of the air filter 21 and the air flow meter 20 into the intake chamber 19 is supplied through the second intake passage 15 to the closed space V in the first intake passage 11. While in this embodiment the second control valve 17 is driven by a cam shaft 7 which also drives the intake valve 13, it may also be driven by a separately arranged cam shaft.

In the operation range of α being not greater than α₀ (α ≦ α₀), the opening of the third control valve 30 is controlled as described above in interlocked motion with the accelerator operation along the line D in FIG. 8. In other words, when the cable 37 is pulled in the direction of the arrow in FIG. 7, the lever 36, the rotary shaft 35 and the lever 38 are rotated in a body in the direction of the arrow in FIG. 7 (counterclockwise), the rotation is transmitted through the rod 39 to the lever 32 and the valve shaft 31, and the third control valve is opened corresponding to the accelerator opening α. Since the opening of the third control valve 30 is controlled as described above, the amount of external air supplied to the closed space V in the low load operation range of the accelerator opening α being not greater than α₀ (α ≦ α₀) is controlled according to the engine load. Since the length of the rod 39 is adjustable, difference in opening of the third control valve 30 from cylinder to cylinder is eliminated.

When the intake stroke of the current cycle is started upon opening of the intake valve 13 and closing of the exhaust valve 14, the second control valve 17 is closed as described before and external air of about the atmospheric pressure is contained in the closed space V. An appropriate amount of fuel is injected through the fuel injection device 18 to the contained air to produce mixture of a required air to fuel ratio. The mixture is drawn during the intake stroke into the combustion chamber S, and undergoes compression stroke and combustion stroke in the combustion chamber S. While the air flow meter 20 is provided for producing a required air to fuel ratio of mixture, it may also be arranged to produce the required air to fuel ratio of mixture by providing detection means for detecting the pressure in the closed space V and according to the detected results.

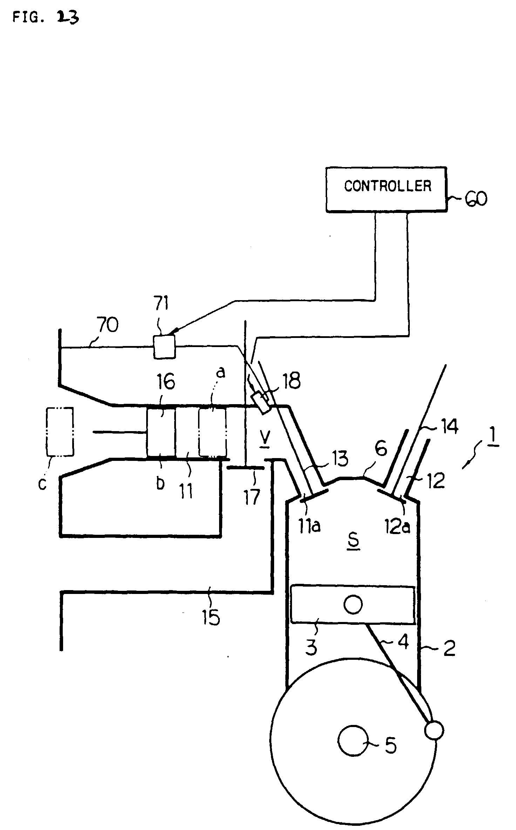

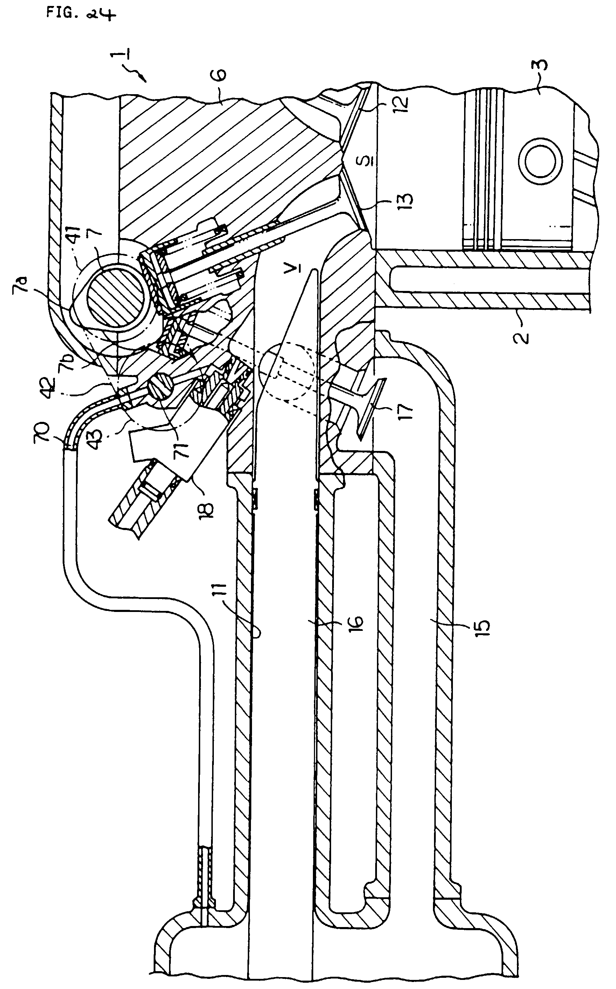

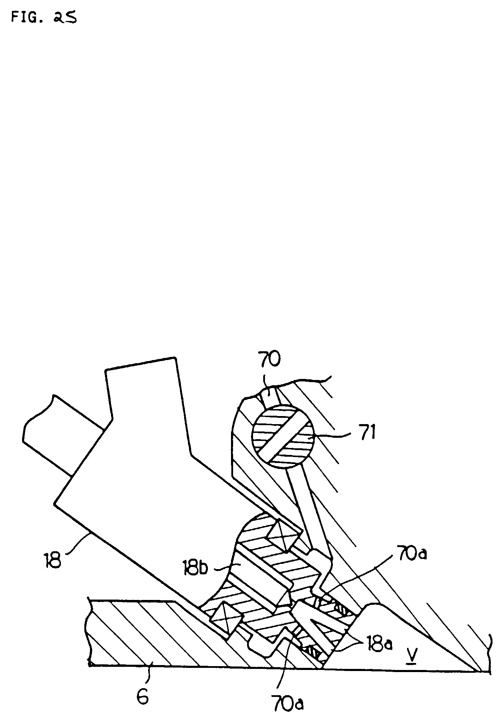

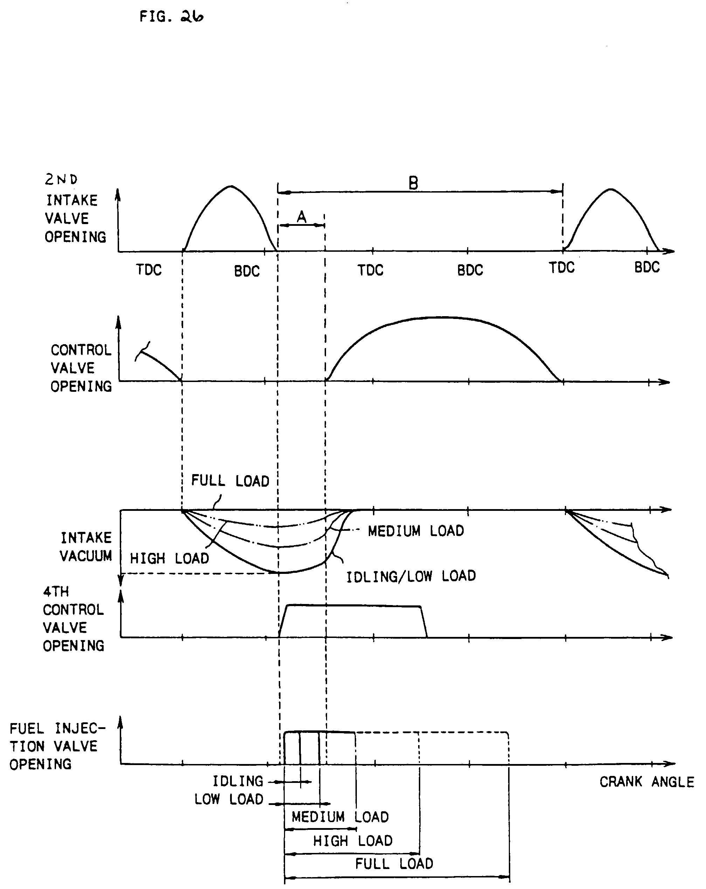

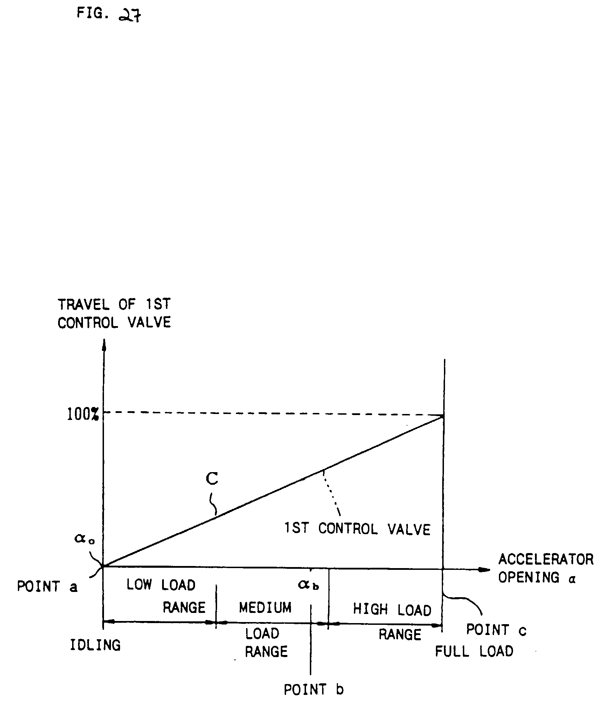

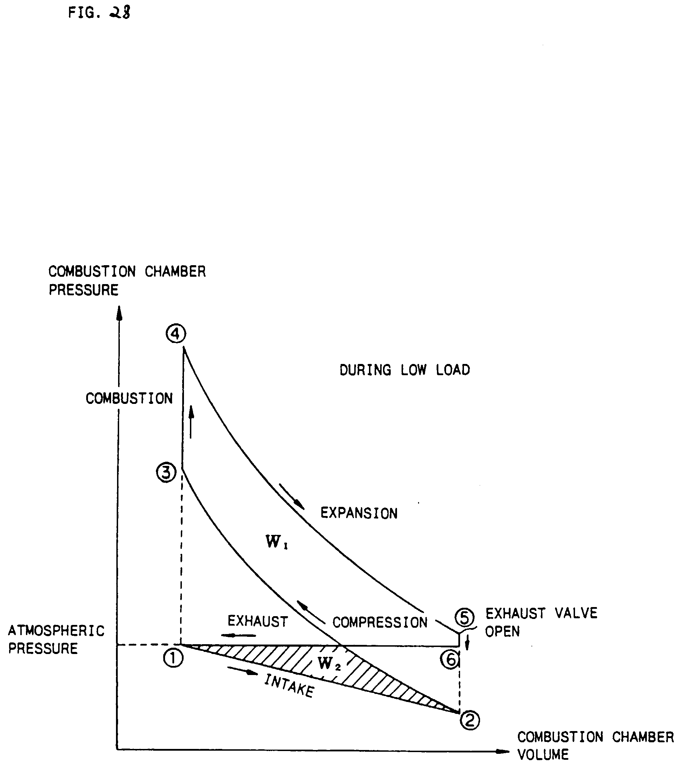

As described above, since the pressure in the closed space V formed on the upstream side of the intake valve 13 before it opens at least during the low load range is kept at about the atmospheric pressure in this embodiment, the intake stroke is started as shown in FIG. 3 from about the atmospheric pressure. As a result, also in this embodiment, the pumping loss W₂ is made smaller in comparison to the pumping loss W₂' (FIG. 23) of the conventional intake stroke started from a negative pressure. As a result, similarly to the first embodiment, the thermal efficiency and the fuel economy of the engine 1 are improved.

When it is intended to obtain a high power engine by setting a long period of time during which both the intake valve 13 and the exhaust valve 14 are open, since the pressure in the closed space V is kept at about the atmospheric pressure, exhaust gas is less likely to flow back into the first intake passage 11 even if both the intake valve 13 and the exhaust valve 14 are open. As a result, exhaust gas is not drawn back into the combustion chamber S to make idling operation unstable.

As described before, the first control valve 16 of this embodiment slides to the left as seen in FIG. 4 as the accelerator opening α increases. Namely, if the accelerator opening α increases beyond α₀ in FIG. 8 (α > α₀), the opening direction movement of the rod 27 of the accelerator device shown in FIG. 4 is converted to the counterclockwise rotation of the lever 25 about the shaft 24, and the first control valve 16 slides to the left as seen in FIG. 4 in proportion to the accelerator opening α (along the line C in FIG. 8) within the first intake passage 11. As a result, at the accelerator opening α_{b} in a medium load range for instance, the first control valve 16 is at the phantom line position (b) when the accelerator opening is α_{b} in the medium load range shown in FIG. 8 for instance, and at the phantom line position (c) in FIG. 4 when the accelerator opening is α_{c} in the high load range so that the closed space volume V is further increased. Thus, since the closed space volume (namely the amount of external air supplied into the closed space volume V) is increased or decreased according to the engine load, an exact amount of air corresponding to the accelerator operation amount is supplied from the closed space V into the combustion chamber S in the cylinder 2 in a stabilized manner.

In this embodiment, when the accelerator opening α exceeds α_{c} (α > α_{c}) in the high load range, the first control valve 16 is out of the first intake passage 11. For instance, the first control valve 16 at the full load is located at the phantom line position (d) in FIG. 4, with the first intake passage 11 communicated to the intake chamber 19, and the external air is directly introduced into the cylinder 2 during the intake stroke. Here, as shown in FIG. 4, the fore-end of the first control valve 16 is formed as a tapered surface 16a, and the internal connecting wall 19a of the first intake passage 11 of the intake chamber 19 is rounded to avoid sudden change in the amount of external air introduced into the first intake passage 11 when the first control valve 16 goes out of the first intake passage 11.

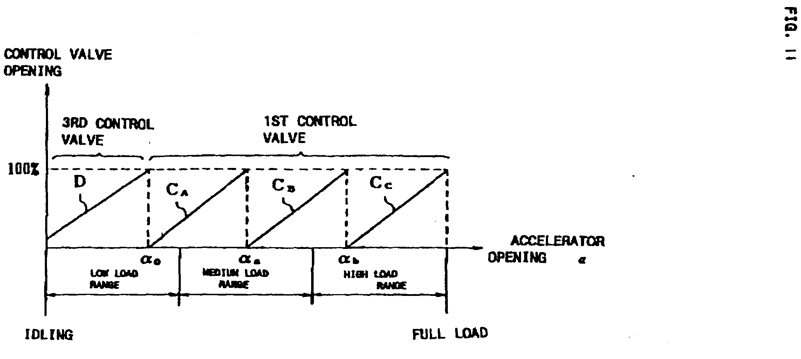

While the third control valve 30 is located in the middle of the second intake passage 15, it may also be located on the downstream side of the air flow meter 20 (Refer to FIG. 10).

If the volume of the closed space V can be made small enough by the arrangement of the first control valve 16 located close enough toward the intake valve 13, the amount of air supplied into the closed space V can also be made small enough, and therefore the third control valve 30 may be omitted.

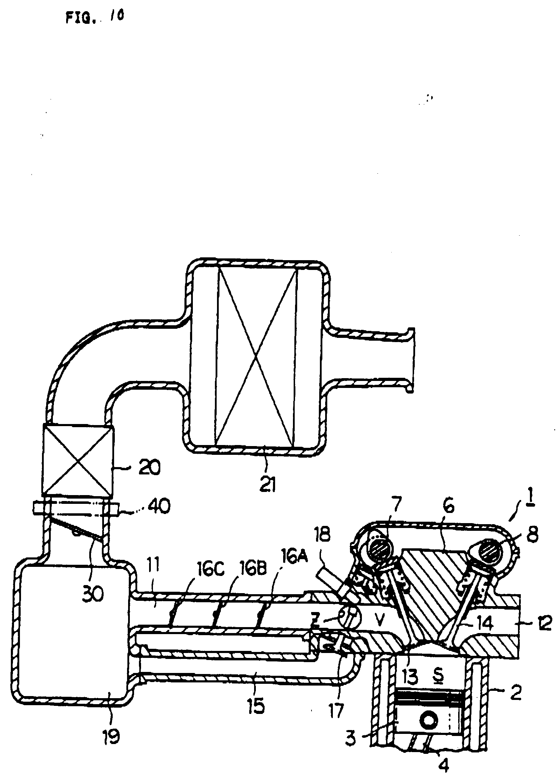

Next, a modification of the second embodiment is shown in FIG. 9 which is a side view in cross section of an intake control system as the third embodiment of this invention. In the figure, like numerals denote like parts as those shown in FIG. 4 and their descriptions are omitted.

In the intake control system of the multiple cylinder engine 1 of this embodiment, the first and second intake passages 11 and 15 are made independent of each other, with the first intake passages 11 connected to each other through an intake chamber 19A on one hand, and the second intake passages 15 connected to each other through another intake chamber 19B on the other. Only the intake chamber 19B is connected through the air flow meter 20 to the air filter 21 through which the external air is introduced.

Since the basic principle of the intake control system of this embodiment is the same with that of the second embodiment, the same effect is obtained with this embodiment as that of the second embodiment. However, an additional effect of inertia supercharging is also obtained with this embodiment, which will be hereunder described.

Since the volume of the closed space V is large immediately after the second control vale 17 is opened in the high load range, the external air supplied through the second control valve 17 to the closed space V flows away from the intake valve 13. As a result, the pressure around the intake valve 13 is temporarily lower than the pressure in the area apart from the intake valve 13.

Next, when the second control valve 17 i closed, the intake valve 13 is opened, and the piston 3 slides down in the cylinder 2 to produce a negative pressure in the cylinder 2, the external air supplied to the closed space V is now drawn toward the intake valve 13 and into the cylinder 2. Here, since the pressure around the intake valve 13 is lower than the pressure in the area apart from the intake valve 13, the external air of a high pressure is introduced into the cylinder 2, which is an inertia supercharging effect to attain a high charging efficiency.

While the supercharging effect described above is obtained not only with multiple cylinder engines but also with single cylinder engines, since the individual first intake passages 11 of this embodiment are connected each other through the intake chamber 19A, the supercharging effect is accordingly enhanced. This is because, immediately after the second control valve 17 is opened, the external air flows in the closed space rapidly away from the intake valve 13 through the second control valve 17 by the negative pressure effect of intake strokes of pistons of other cylinders, and therefore the pressure around the intake valve 13 becomes further lower than the pressure in the area apart from the intake valve 13.

Next, the fourth embodiment of this invention will be described in reference to FIGs. 10 and 11. FIG. 10 is a side view in cross section of the intake control system as the fourth embodiment of this invention. FIG. 11 is a graph showing the changes in the openings of the first and third control valves relative to the accelerator opening. In FIG. 10, like parts as those in FIG. 4 are provided with like reference numerals and their descriptions are omitted.

In the intake control system of this embodiment, the first control valves 16A, 16B and 16C are provided at suitable intervals in the first intake passage 11, and the third control valve 30 is provided on the downstream side of the air flow meter 20.

As shown in FIG. 11, when the operation range of the engine 1 is divided according to the accelerator opening α into the low, medium, and high load ranges, in the low load range of the accelerator opening α being α₀ or less (α ≦ α₀), all the first control valves 16A, 16B, 16C are kept inoperative (in the fully closed state). Here, the volume of the closed space V in the first intake passage 11 is kept at a minimum. Also in this operation range, the opening of the third control valve 30 is controlled (along the line D in FIG. 11) by the accelerator opening α (engine load). The third control valve 30 as shown in FIG. 11 is open to some extent even during idling.

Also in the engine 1 of this embodiment, when the intake valve 13 is closed at the end of a previous cycle and the compression stroke is started, the second control valve 17 opens, and external air introduced through the air filter 21, the air flow meter 20, and the third control valve 30 into the intake chamber 19 is supplied through the second intake passage 15 to the closed space V (the space between the first control valve 16A and the intake valve 13) in the first exhaust passage 11.

In the operation range of the accelerator opening α being α₀ or less (α ≦ α₀), the opening of the third control valve 30 is controlled in interlocked motion with the accelerator operation along the line D i FIG. 11, which will be hereunder described.

In this embodiment, since the first control valve 16A is not located close enough to the intake valve 13, the volume of the closed space V cannot be made small. As a result, if the pressure in the closed space V is about the atmospheric pressure when the intake valve 13 is opened, the amount of external air taken into the cylinder 2, especially during idling, becomes excessive, and more amount of fuel is required to maintain a suitable air to fuel ratio of mixture. As a result, the output of the engine 1 becomes excessive, the idling revolution increases, noise level increases, and the fuel economy is lowered.

For that reason, the third control valve 30 is provided so as to be opened to some extent during idling as described above, to restrict the amount of air supplied to the closed space V.

The third control valve 30 may also be provided in each of the second intake passages 15 for each cylinder as in the second embodiment (Refer to FIG. 4). Also, if the volume of the closed space V can be made small because of the location of the first control valve 16A close enough to the intake valve 13, the third control valve 30 may be omitted.

In this cycle, when the intake stroke is started with the opening of the intake valve 13 and simultaneous closing of the exhaust valve 14, the second control valve 17 is closed and external air is contained in the closed space V. An appropriate amount of fuel is injected through the fuel injection device 18 to the contained air to produce mixture of a required air to fuel ratio. The mixture after being subjected to the compression stroke undergoes combustion in the combustion chamber S.

In this embodiment as described above, since the pressure in the closed space V before the intake valve 13 opens at least in the low load range of the accelerator opening α being equal to or greater than α₀ is kept about the atmospheric pressure, as shown in FIG. 3, the intake stroke is started from about the atmospheric pressure. As a result, the pumping loss W₂ (Refer to FIG. 3) is kept low, engine efficiency is enhanced, and fuel economy is improved.

When the accelerator opening α exceeds α₀ (α > α₀), the opening of the first control valve 16A increases in proportion to the accelerator opening α (along the line C_{A} in FIG. 11). When the accelerator opening α reaches α_{A} in the medium load range as shown in FIG. 11, the first control valve 16A is wide open and the next first control valve 16B begins to open. The opening of the first control valve 16B increases with the increase in the accelerator opening α along the line C_{B} in FIG. 11, and when it reaches α_{B} in the high load range, the first control valve 16_{B} is wide open, and the next first control valve 16C begins to open. The opening of the first control valve 16C increases with the increase in the accelerator opening α along the line C_{C} in FIG. 11, and becomes wide open at the full load. Therefore, at the full load, all the first control valves 16A, 16B, and 16C are wide open, the first intake passage 11 is connected to the intake chamber 19, and the external air is introduced during the intake stroke directly through the first intake passage 11 into the cylinder 2.

This embodiment may also be applied to an engine with an intake system supercharger 40 as shown in FIG. 10 so as to provide supercharging effect in the medium and higher load ranges. In that case, knocking is effectively prevented from occurring because temperature rise in mixture due to the supercharging effect at the end of the compression stroke can be restricted by cooling effect of the Miller cycle.

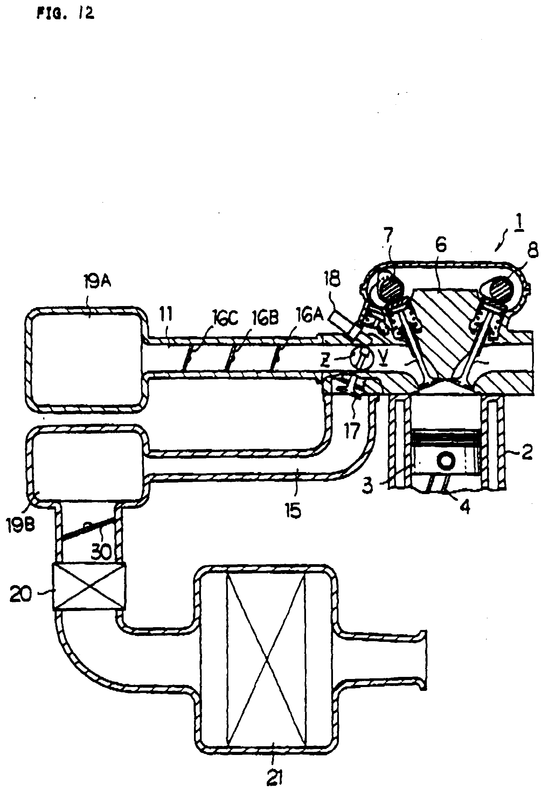

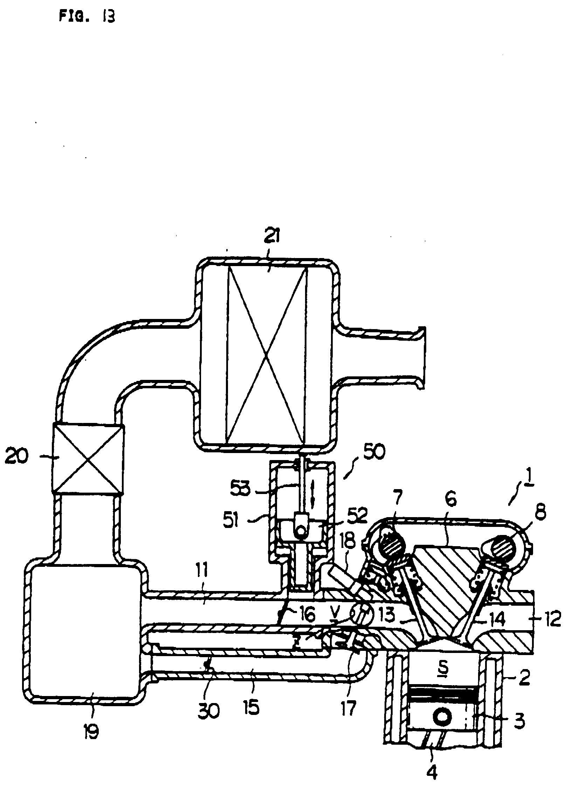

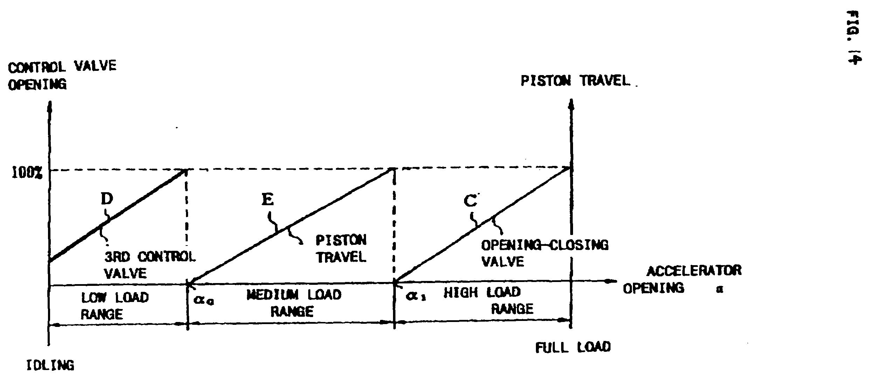

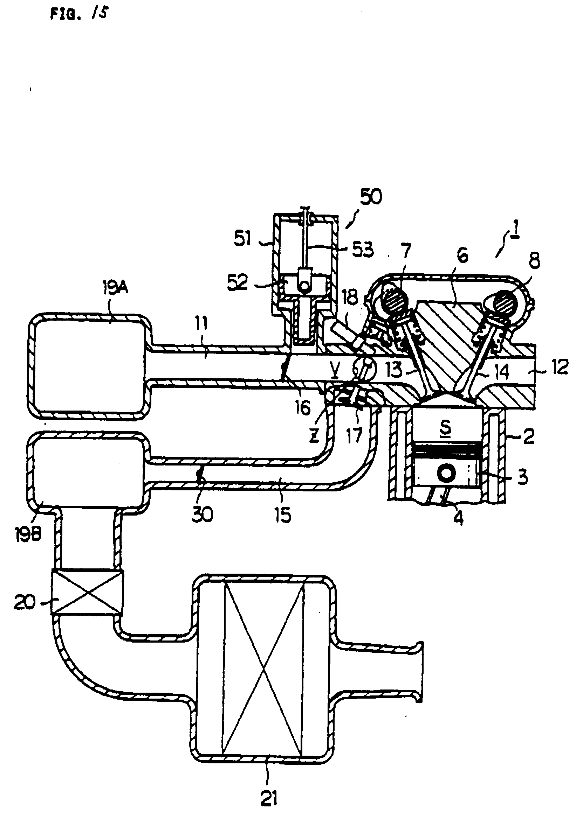

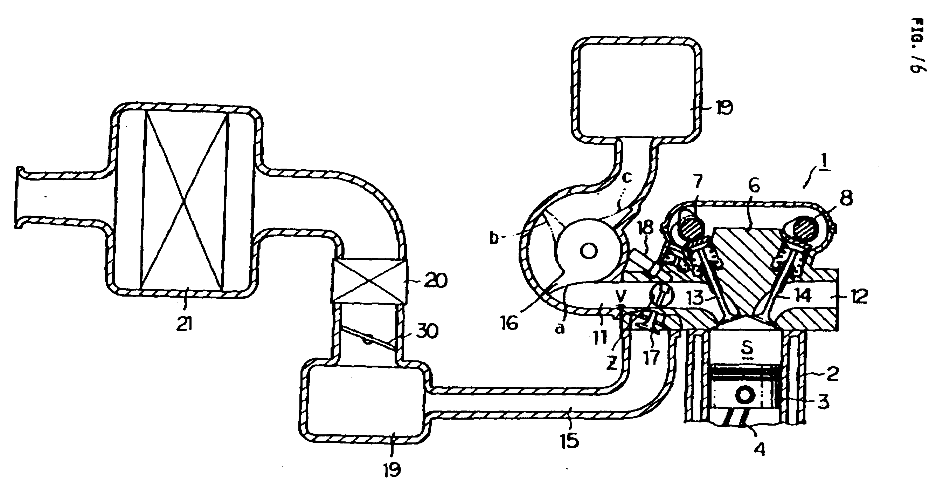

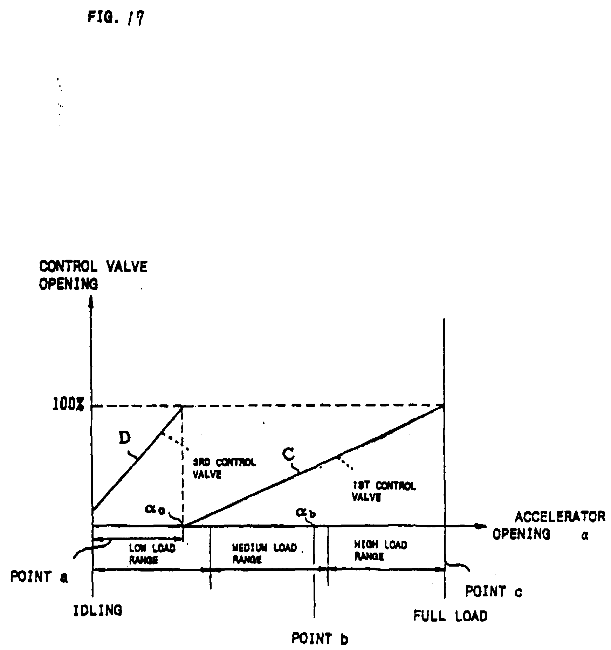

Next, a modification of the fourth embodiment is shown in FIG. 12. FIG. 12 is a side view in cross section of the intake control system as the fourth embodiment of this invention. In FIG. 12, like parts as those in FIG. 10 are provided with like reference numerals and their descriptions are omitted.

The intake control system of this embodiment is a modification of the fourth embodiment shown in FIG. 10 in which the first and second intake passages 11 and 15 are made independent of each other, with the first intake passages 11 connected to each other through an intake chamber 19A on one hand, and the second intake passages 15 connected to each other through another intake chamber 19B on the other.

Since the basic principle of the intake control system of this embodiment is the same with that of the fourth embodiment, the same effect is obtained with this embodiment as that of the fourth embodiment. However, an additional effect of inertia supercharge effect is also obtained with this embodiment as described on the third embodiment.

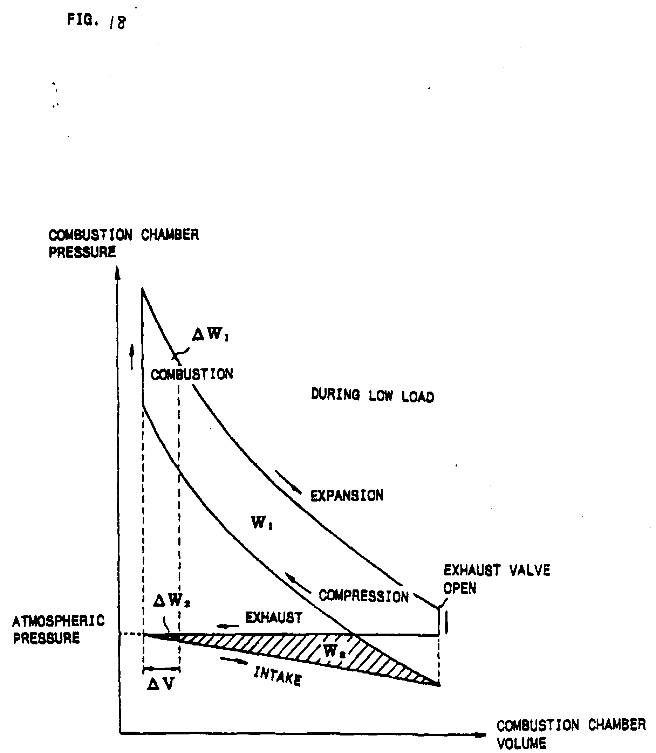

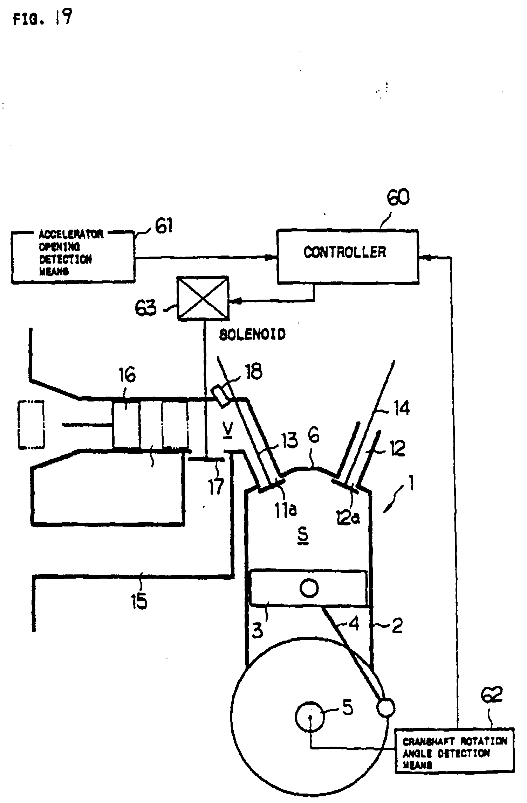

Next, the sixth embodiment will be described in reference to FIGs. 13 and 14. FIG. 13 is a side view in cross section of the intake control system as the sixth embodiment of this invention. FIG. 14 is a graph showing the changes in the openings of the first and second control valves and the change in the piston travel of a variable volume mechanism relative to the accelerator opening. In FIG. 13, like parts as those in FIG. 4 are provided with like reference numerals and their descriptions are omitted.

In this embodiment of the intake control system as shown in FIG. 13, a variable volume mechanism 50 is provided on the downstream side of the first control valve 16 of the first intake passage 11 for each cylinder.

The variable volume mechanism 50 is for increasing and decreasing the volume of the closed space V produced in the first intake passage 11 according to the accelerator opening, and comprises a piston 52 disposed for free vertical sliding within a cylinder 51 communicated to the first intake passage 11 and linked through a rod 53 to the accelerator device (not shown).

As shown in FIG. 14, when the operation range of the engine 1 is divided according to the accelerator opening α into the low, medium, and high load ranges, in the low load range of the accelerator opening α being α₀ or less (α ≦ α₀), the first control valve 16 and the variable volume mechanism are kept inoperative with the first control valve 16 fully closed and the piston 52 of the variable volume mechanism 50 at the bottom position in the cylinder 51. Here, the volume of the closed space V is kept at a minimum. Also in this operation range, the opening of the third control valve 30 is controlled (along the line D in FIG. 14) by the accelerator opening α (engine load). The third control valve 30 as shown in FIG. 14 is open to some extent even during idling.

Also in this embodiment, when the intake valve 13 is closed at the end of a previous cycle and the compression stroke is started, the second control valve 17 opens and external air introduced through the air filter 21 and the air flow meter 20 is supplied through the second intake passage 15 to the closed space V in the first intake passage 11.

When the intake stroke of the current cycle is started with simultaneous opening of the intake valve 13 and closing of the exhaust valve 14, the second control valve 17 is closed, and air from outside is contained in the closed space V. An appropriate amount of fuel is injected through the fuel injection device 18 to the contained air to produce mixture of a required air to fuel ratio. The mixture after being subjected to the compression stroke undergoes combustion in the combustion chamber S.

In this embodiment as described above, since the pressure in the closed space V is kept about the atmospheric pressure before the intake valve 13 opens at least in the low load range of the accelerator opening α being equal to or greater than α₀, as shown in FIG. 3, the intake stroke is started from about the atmospheric pressure. As a result, the pumping loss W₂ (Refer to FIG. 3) is kept low, engine efficiency is enhanced, and fuel economy is improved.

When the accelerator opening α exceeds α₀ (α > α₀), the variable volume mechanism 50 is actuated and the piston 52 of the variable volume mechanism 50 slides upward within the cylinder 51 (along the line E in FIG. 14) in proportion to the accelerator opening α. As a result, the volume of the closed space V increases gradually. When the accelerator opening α reaches α₁ in the high load range as shown in FIG. 14 and the piston 52 reaches the top limit, the first control valve 16 begins to open. The opening of the first control valve 16 increases with the increase in the accelerator opening a along the line C in FIG. 14, and is wide open at the full load. Therefore at the full load, the first intake passage 11 is connected to the intake chamber 19, and the external air is introduced during the intake stroke directly through the first intake passage 11 into the cylinder 2.

A modification of the sixth embodiment is shown in FIG. 15. FIG. 15 is a side view in cross section of the intake control system as the seventh embodiment of this invention. In FIG. 15, like parts as those in FIG. 13 are provided with like reference numerals and their descriptions are omitted.

The intake control system of this embodiment is a modification of the sixth embodiment shown in FIG. 13 in which the first and second intake passages 11 and 15 are made independent of each other, with the first intake passages 11 connected to each other through an intake chamber 19A on one hand, and the second intake passages 15 connected to each other through another intake chamber 19B on the other.

Since the basic principle of the intake control system of this embodiment is the same with that of the sixth embodiment, the same effect is obtained with this embodiment as that of the sixth embodiment. An additional effect of inertia supercharging effect is also obtained with this embodiment as described on the third embodiment.

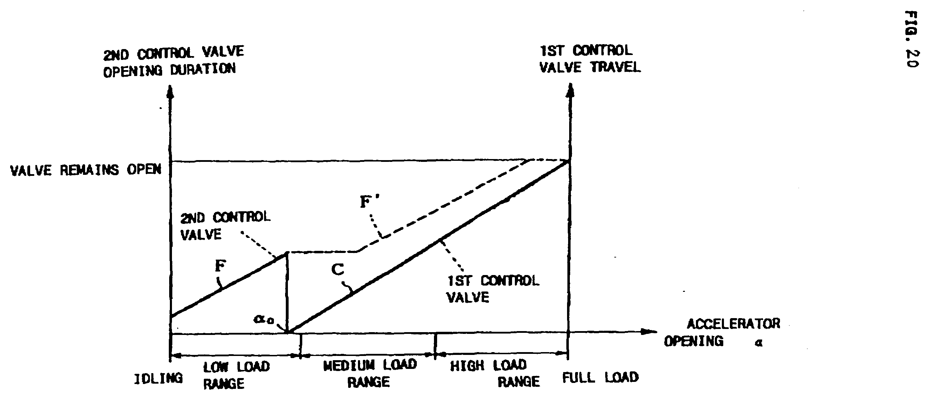

Next, the eighth embodiment of this invention will be described in reference to FIGs. 16 and 17. FIG. 16 is a side view in cross section of the intake control system as the eighth embodiment of this invention. FIG. 17 is a graph showing the changes in the openings of the first and third control valves relative to the accelerator opening. In FIG. 16, like parts as those in FIG. 15 are provided with like reference numerals and their descriptions are omitted.

In the intake control system of this embodiment as shown in FIG. 16, the first and second intake passages 11 and 15 are made independent of each other, with the first intake passages 11 connected to each other through an intake chamber 19A on one hand, and the second intake passages 15 connected to each other through another intake chamber 19B on the other.

A first control valve 16 of a rotary type is provided in the middle of the first intake passage 11. A closed space V in the first intake passage 11 is formed between the first control valve 16 and the intake valve 13.

As shown in FIG. 17, when the operation range of the engine 1 is divided according to the accelerator opening α into the low, medium, and high load ranges, in the low load range of the accelerator opening α being α₀ or less (α ≦ α₀), the first control valve 16 is kept inoperative (in the fully closed state), corresponding to the solid line position (a) in FIG. 16. Here, the volume of the closed space V in the first intake passage 11 is kept at a minimum. Also in this operation range, the opening of the third control valve 30 is controlled (along the line D in FIG. 17) by the accelerator opening α. The third control valve 30 as shown in FIG. 17 is open to some extent even at the time of idling.

Also in the engine 1 of this embodiment, when the intake valve 13 is closed at the end of a previous cycle and the compression stroke is started, the second control valve 17 opens and external air introduced through the air filter 21 and the air flow meter 20 is supplied through the second intake passage 15 to the closed space V in the first exhaust passage 11.

When the intake stroke of the current cycle is started with the opening of the intake valve 13 and the closing of the exhaust valve 14, the second control valve 17 is closed, and air from outside is contained in the closed space V. An appropriate amount of fuel is injected through the fuel injection device 18 to the contained air to produce mixture of a required air to fuel ratio. The mixture after being subjected to the compression stroke undergoes combustion in the combustion chamber S.

In this embodiment as described above, since the pressure in the closed space V is kept at about the atmospheric pressure before the intake valve 13 opens at least in the low load range of the accelerator opening α being equal to or greater than α₀, as shown in FIG. 3, the intake stroke is started from about the atmospheric pressure. As a result, the pumping loss W₂ (Refer to FIG. 3) is kept low, engine efficiency is enhanced, and fuel economy is improved.

When the accelerator opening α exceeds α₀ (α > α₀), the first control valve 16 begins to open with the opening changing along the line C in FIG. 17 in proportion to the accelerator opening α. In other words, the first control valve 16, at an accelerator opening α_{b} in the medium load range in FIG. 17 for instance, is in the phantom line position (b), and at the full load the valve 16 is wide open at the phantom line position (c) in FIG. 16. Therefore at the full load, the first intake passage 11 is connected to the intake chamber 19A, and the external air is introduced during the intake stroke directly through the first intake passage 11 into the cylinder 2.

When a variable compression mechanism (Not shown. For details refer to Tokkai Hei 4-241740) is combined with any of the eight embodiments described above, a pressure indicator diagram is obtained as shown in FIG. 18. According to this, while the pumping loss W₂ increases by a small increment ΔW₂ due to the increase in the combustion chamber volume ΔV, the work W₁ increases by an increment ΔW₁ of an increasing ratio higher than that of the increment ΔW₂. As a result, the work Wᵢ on the diagram expressed by the equation (1) increases, and the thermal efficiency η calculated by the equation (2) increases to further improve fuel economy.

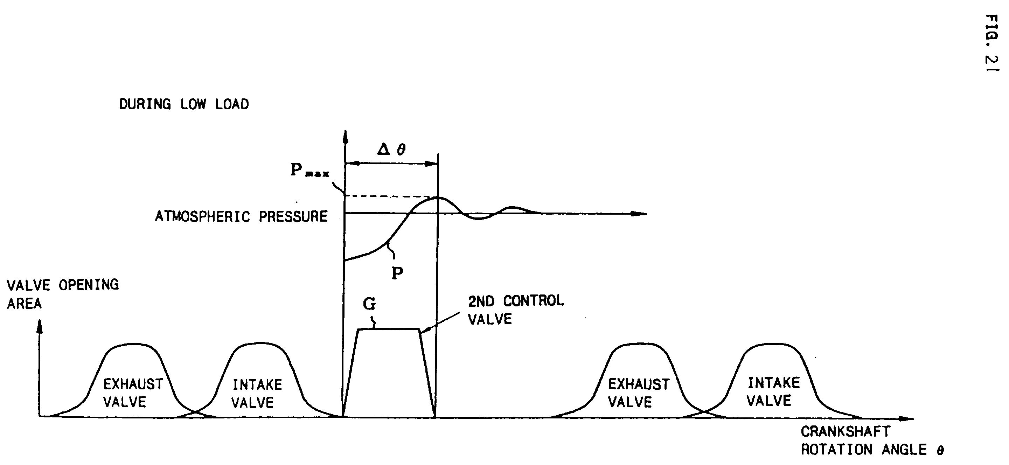

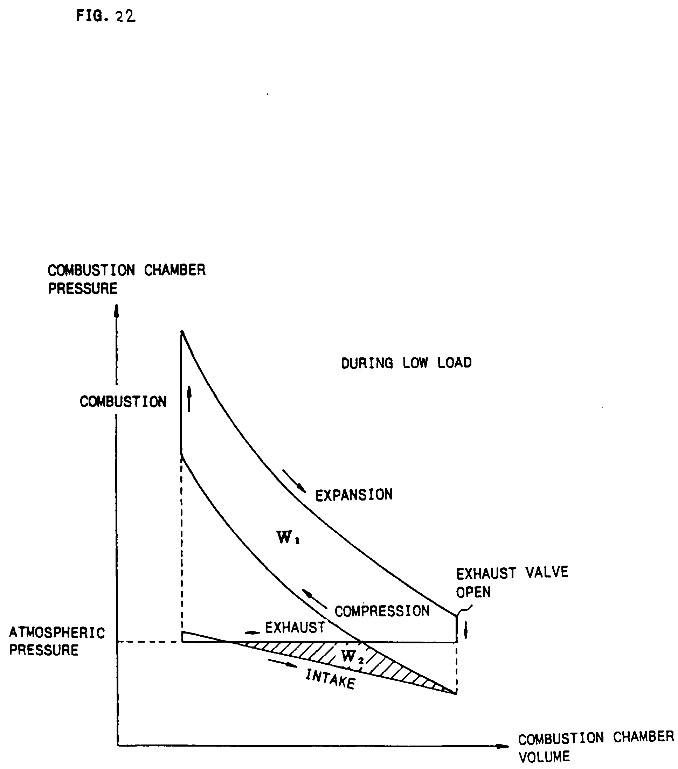

The ninth embodiment of this invention will be hereunder described in reference to FIGs. 19 through 22. FIG. 19 is a schematic cross section of a basic structure of an intake control system as the ninth embodiment of this invention. FIG. 20 is a graph showing the changes in the travel of the first control valve and opening duration of the second control valve relative to the accelerator opening. FIG. 21 is a diagram showing the changes in opening areas of the intake valve, exhaust valve, and second control valve relative to the crankshaft rotation angle. FIG. 22 is a pressure indicator diagram of the engine at a low load.

The intake control system of this embodiment is a modification of the first embodiment in which the opening duration of the second control valve 17 at least at a low load is increased or decreased according to the accelerator operation amount (accelerator opening). Therefore in FIG. 19, like parts as those in FIG. 1 are provided with like reference numerals and they will be hereunder described.

In FIG. 19 are shown a controller 60, accelerator opening detection means 61, and crankshaft rotation angle detection means 62. The second control valve 17 in this embodiment is opened and closed by a solenoid 63.

While thermal efficiency of the engine 1 is improved also in this embodiment by the same effect as that of the first embodiment, the opening duration of the second control valve 17 relative to the accelerator opening α is controlled to follow the line F in FIG. 20 particularly in the low load range (the operation range before the first control valve 16 opens) with the accelerator opening α being equal to or smaller than α₀ (α ≦ α₀).

In other words, signals of an accelerator opening α detected by the accelerator opening detection means 61 and a crankshaft rotation angle Θ detected by the crankshaft rotation angle detection means 62 are input into the controller 60. The controller 60, after the intake valve 13 is closed as shown in FIG. 21, sends a control signal to the solenoid 63 to open the second control valve 17 for a duration (for the duration corresponding to the crankshaft rotation angle ΔΘ in FIG. 21) corresponding to the current accelerator opening α. In FIG. 21, the bent line G shows the change in the opening area of the second control valve 17 driven by the solenoid 63 as in this embodiment.

FIG. 21 shows the change in the pressure P in the closed space V after the second control valve 17 is opened with the accelerator opening α being α₀. Here, the opening duration of the second control valve 17 is set so that the second control valve 17 is closed when the pressure P in the closed space V reaches the maximum value Vₘₐₓ.

By controlling the opening duration of the second control valve 17 as described above, the pressure at the beginning of the intake stroke can be maintained positive as shown in FIG. 22 when the accelerator opening α is α₀. As a result, the pumping loss W₂ can be further reduced, the efficiency of the engine 1 is further improved, and the fuel economy is further improved.

It may also be arranged in the medium and high load ranges where the accelerator opening α exceeds α₀ (α > α₀) that the opening duration of the second control valve 17 is either held constant at the value when the accelerator opening α is α₀ or changed along the broken line F' in FIG. 20.

As evident from the description above, the pressure on the upstream side of the intake valve before it is opened is kept at about the atmospheric pressure and the intake stroke is started at about the atmospheric pressure. As a result, the pumping loss is reduced, the thermal efficiency of the engine is increased, and the fuel economy is improved.

Moreover, in the low load range and before the first control valve is driven, the amount of external air supplied to the first intake passage is increased or decreased according to the accelerator operation amount (engine load). As a result, the amount of air supplied to the closed space is prevented from becoming excessive even when the minimum volume of the closed space cannot be made small enough for structural reasons in the low load range including the idling before the first control valve is driven, and attain the effect of making the amount of air supplied to the combustion chamber of the engine optimum.

Furthermore, it is possible to close the second control valve at the time the pressure of the air supplied from outside by the opening of the second control valve into the closed space in the first intake passage reaches the maximum (positive) value. This makes it possible to increase the intake pressure at the start of the intake stroke and to attain the effect of further minimizing the pumping loss.

Hereinafter, further preferred embodiments of the present invention will be described so as to illustrate and explain the fuel injection according to preferred embodiments in greater detail. While certain aspects of the following embodiments are similar to the above-described preceding embodiments, specific attention is to be paid to the charge forming process of the following embodiments. Some facets of the fuel injection system may also be applied to combustion engines not having all the features claimed in claim 1, as a matter of course.

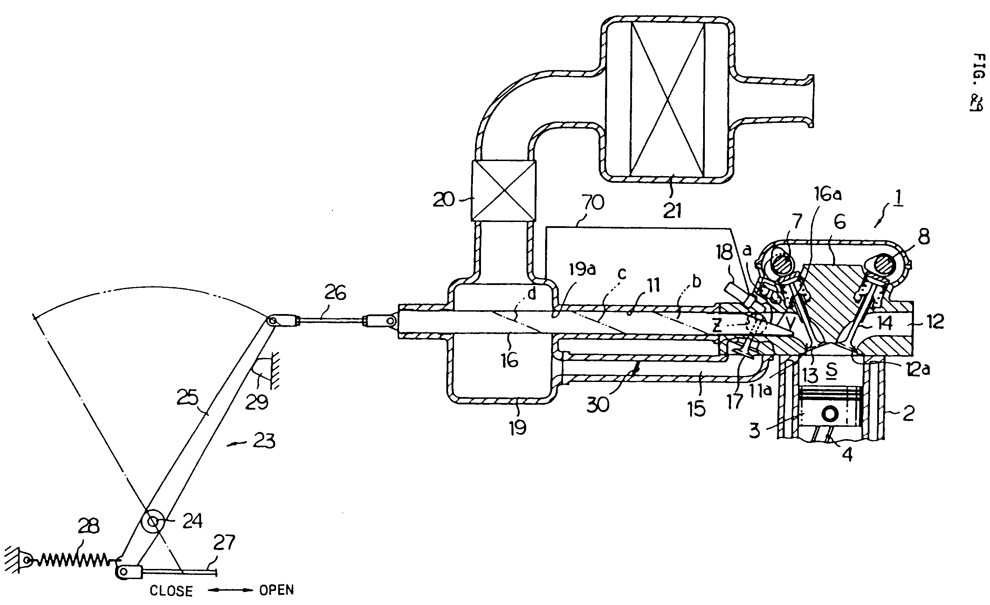

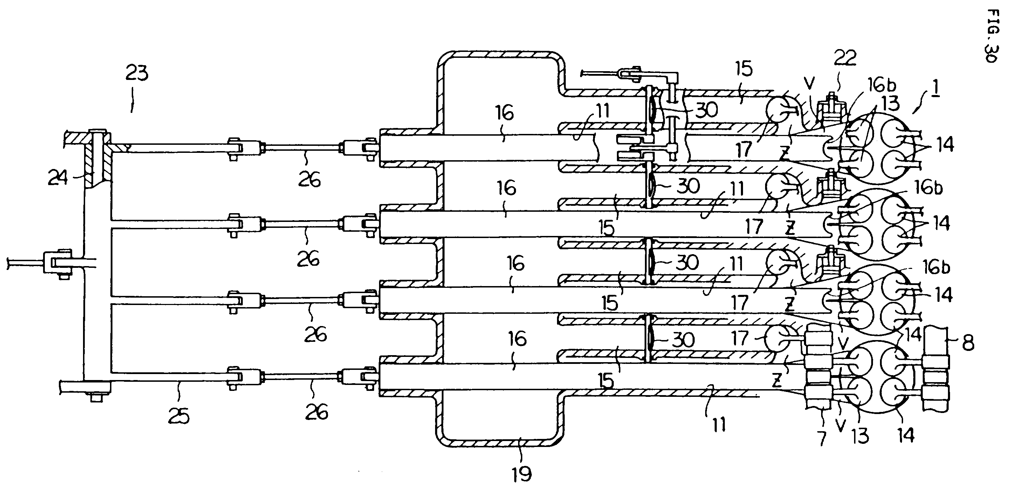

FIG. 23 is a schematic cross section of a basic structure of an intake control system as the tenth embodiment of this invention. FIG. 24 is an enlarged cross section of the intake control device portion of the engine. FIG. 25 is an enlarged cross section of the fuel injection device portion of the engine. FIG. 26 is a graph showing openings of valves and intake negative pressure characteristics. FIG. 27 is a graph showing the change in the stroke of the first control valve relative to the accelerator opening. FIG. 28 is a pressure indicator diagram of an engine during low load operation.

In FIG. 23, a 4-cycle engine 1 comprises a cylinder 2, a piston 3 fit in the cylinder 2 for vertical reciprocal sliding, and a connecting rod 4 connecting the piston 3 to a crankshaft 5.

A first intake passage 11 for introducing external air into a combustion chamber S and an exhaust passage 12 for discharging combustion gas (exhaust gas) produced by combustion of mixture in the combustion chamber S are connected to a cylinder head 6 attached to the top of the cylinder 2 of the engine 1. The first intake passage 11 and the exhaust passage 12 are open to the combustion chamber S through respective intake port 11a and an exhaust port 12a. The first intake port 11a and the exhaust port 12a are opened and closed respectively by an intake valve 13 and an exhaust valve 14 operated by a valve operating mechanism (not shown) at suitable timings.

Another, second intake passage 15 for introducing external air is connected to an intermediate position (near the intake valve 13) on the first intake passage 11.

The first intake passage 11 is provided with a first control valve 16 for sliding within the first intake passage 11 in interlocked motion with the operation amount of the accelerator device (not shown). A second control valve 17 is provided at the joint area between the first and second intake passages 11 and 15. A fuel injection device 18 is provided on the first intake passage 11.

The first control valve 16 is for changing the volume of a closed space in the first intake passage 11 between the first control valve 16 and the intake valve 13. The volume V is increased according to the increase in the accelerator operation amount (the accelerator opening or engine load) by sliding the valve 16 to the left as seen in FIG. 23. The second control valve 17, as will be described later, is constantly closed when the intake valve 13 is open at least at a low load, and open constantly or by an opening corresponding to a given crankshaft rotation angle when the intake valve 13 is closed.

In this embodiment as shown in FIG. 24 in detail, a third intake passage 70 is employed for introducing external air to the fuel injection portion of the fuel injection device 18, with a fourth control valve 71 of a rotary type disposed in the middle of the intake passage 70 (in this embodiment at the cylinder head 6). In the external air outlet portion of the third intake passage 70 as shown in FIG. 25 in detail, a contracted portion 70a is formed to open to each of bifurcate nozzle ports 18a of the fuel injection device 18. In FIG. 25, the numeral 18 denotes a fuel injection valve to be opened and closed at suitable timings.

As shown in FIG. 24, the intake valve 13 and the second control valve 17 are respectively driven by cams 7a and 7b formed on a cam shaft 7 at suitable timings. The rotation of the cam shaft 7 is transmitted through a sprocket 41, a chain 42, and a sprocket 43 to the fourth control valve 71 so as to be opened and closed at suitable timings.

Thus, the intake control device of this invention comprises the first intake passage 11, the intake valve 13, the second intake passage 15, the first and second control valves 16 and 17, the third intake passage 70, and the fourth control valve 71. Its function will be hereinunder described in reference to FIGs. 24 and 25.

A 4-cycle engine of this invention completes its one cycle, as shown in an indicator diagram of FIG. 28, through the intake stroke from (1) to (2), a compression stroke from (2) to (3), a combustion (explosion) stroke from (3) to (4), an expansion stroke from (4) to (5), and an exhaust stroke from (5) to (1). When the exhaust valve 14 opens at (5) to start the exhaust stroke from (5) to (1), exhaust gas blows out during the stroke from (5) to (6) in which the pressure in the combustion chamber S lowers down to the atmospheric pressure.

Referring to FIG. 27, the operation range (the range from idling to full load operation) of the engine 1 is divided into a low load range, medium load range, and a high load range with respect to the accelerator opening α. When the accelerator opening α is α₀ (idling), the first control valve 16 is kept inoperative. This state corresponds to the phantom lined position (a) in FIG. 23 and the volume of the closed space V in the first intake passage 11 is kept minimum.

In the engine 1 of this invention as shown in FIG. 26, when the intake valve 13 is closed at the end of a previous cycle and the compression stroke is started, the fourth control valve 71 is opened, and immediately after that fuel is injected from the fuel injection device 18 into the closed space V where mixture of a low pressure before the second control valve 17 is opened is remaining. The injected fuel and the remaining mixture mix together to produce rich mixture. Then when the second control valve 17 is opened, external air of about the atmospheric pressure is introduced into the closed space. Part of external air which is first introduced mixes with the remaining mixture and the resultant mixture is subjected to rapid adiabatic compression by the external air following the air first introduced. As a result, temperature of the mixture rises and the evaporation of fuel is accelerated to enhance thermal efficiency. Here, external air is introduced through the third intake passage 70 while fuel is injected from the fuel injection device 18. Here, a strong negative pressure is prevailing in the closed space V. Since the contracted portion 70a are provided in the external air outlet portion of the third intake passage 70, external air is blown at a high speed to the fuel injection portion and accelerates atomization of fuel sprayed out of the nozzle ports 18a. Fuel evaporation is further accelerated by the rapid temperature rise described above, and combustion efficiency is further enhanced.

When the intake valve 13 is opened and the intake stroke is started, the second control valve 17 remains closed. At this time, change in the negative pressure (intake negative pressure) in the closed space V after the intake stroke is started is shown in FIG. 26 with the load as parameter. When the fourth control valve 71 is opened as described above and external air is introduced in the closed space V, the negative pressure in the closed space decreases gradually. Along with this, the flow speed of external air introduced into the closed space through the fourth control valve 71 decreases, and fuel atomization deteriorates accordingly. In view of this, in this embodiment, it is arranged that fuel injection is started by the fuel injection device 18 from the time point immediately after the fourth control valve 71 begins to open when the negative pressure in the closed space V is still strong.

Since the fourth control valve 71 is opened by an amount corresponding to a given crankshaft rotation angle and, as shown in FIG. 26, for a preset duration which is within the closing duration A of the intake valve 13 and including the duration B from the closing of the intake valve 13 to the opening of the second control valve 17, the effect of introducing external air through the third intake passage to the fuel injection portion (enhancing the thermal efficiency by accelerating fuel evaporation) is maintained while obtaining the effect of enhancing the thermal efficiency of the engine by minimizing the pumping loss. Here, the opening duration of the fourth control valve 71 may also be set to include part of the duration B.

When the piston 3 moves down in the cylinder 2, the mixture is drawn by vacuum produced in the cylinder 2 from the closed space V in the first intake passage 11 through the intake valve 13 into the cylinder 2.

The intake stroke is over when the piston 3 reaches the bottom dead center (B.D.C.) in the state of (2) in FIG. 28 and the compression stroke is started when the piston 3 moves up in the cylinder 2. In the compression stroke, the intake valve 13 which has been open is closed. The mixture drawn into the cylinder 2 is compressed by the ascending piston 3 to a high pressure as shown in FIG. 28, ignited by an ignition plug (not shown) immediately before the piston reaching the top dead center (T.D.C.), and the process moves on to the combustion stroke (from (3) to (4) in FIG. 28). When the intake valve 13 is closed as described above at the start of the compression stroke ((2) in FIG. 28), the second control valve 17 is opened in the meantime, external air of about the atmospheric pressure is supplied from the second intake passage 15 through the second control valve 17 to the closed space V in the first intake passage 11. Part of external air which is first introduced mixes with the remaining mixture and the resultant mixture is subjected to rapid adiabatic compression by the external air following the air first introduced. As a result, temperature of the mixture rises and the evaporation of fuel is accelerated to enhance thermal efficiency. Then the sufficiently evaporated mixture is drawn into the cylinder 2 during the intake stroke of the next cycle and subjected to combustion.

The high pressure combustion gas in the combustion chamber S produced by the combustion of the mixture during the combustion stroke pushes down the piston 3 as it expands (the expansion stroke from (4) to (5) in FIG. 28) and blows out with its own pressure (blow out of exhaust gas during the stroke from (5) to (6) in FIG. 28) when the exhaust valve 14 opens (point (5) in FIG. 28). In this embodiment, Since the fourth control valve 71 is opened immediately before the start of the fuel injection by the fuel injection device 18 to direct the external air introduced through the third intake passage 70 to the fuel injection portion at a high speed, atomization of fuel sprayed out of the nozzle ports 18a is accelerated, fuel evaporation is further accelerated by the ensuing rapid temperature rise, and combustion efficiency of mixture in the combustion chamber S is enhanced.

When the piston 3 starts moving up again after reaching the B.D.C., the combustion gas of about the atmospheric pressure remaining in the cylinder is pushed out by the ascending piston 3 to the exhaust passage 12 (the exhaust stroke from (6) to (7) in FIG. 28).

Thereafter the same strokes are repeated so that the engine is operated continuously.

Since the work W₁ as shown in FIG. 28 is obtained during the one cycle of the compression, combustion, expansion, and exhaust strokes ((2),(3), (4), (5), (6) and (1) in FIG. 28) of the engine 1, and the work W₂ shown with hatching is lost as a pumping loss. Therefore, the indicated work Wᵢ is expressed by the equation below.$\text{(Equation 1)} \text{Wi = W1 - W2}$

As evident from the above equation, the indicated work Wᵢ increases if the pumping loss W₂ decreases. As a result, thermal efficiency η of the engine 1 as expressed by the following equation (2) increases and the fuel economy is improved.$\text{(Equation 2)} {\text{η = A·W}}_{\text{i}} \text{/Q}$ where
- A: is the thermal equivalent of work, and
- Q: is the supplied heat.

In this embodiment, since the pressure in the closed space V formed on the upstream side of the intake valve 13 before it opens is kept at about the atmospheric pressure, as shown in FIG. 28, the intake stroke is started from about the atmospheric pressure ((1) in FIG. 28). As a result, with this embodiment, the pumping loss W₂ is made smaller in comparison to the pumping loss W₂' (FIG. 48) of the conventional intake stroke started from a negative pressure. As a result, the indicated work Wᵢ obtained from the equation (1) increases, the thermal efficiency η obtained from the equation (2) is enhanced, and the fuel economy is improved.

When it is intended to obtain a high power engine by setting a long period of time during which both the intake valve 13 and the exhaust valve 14 are open, since the pressure in the closed space V is kept at about the atmospheric pressure, exhaust gas is less likely to flow back into the first intake passage 11 even if both the intake valve 13 and the exhaust valve 14 are open. As a result, exhaust gas is not drawn back into the combustion chamber S to make idling operation unstable.

As described before, the first control valve 16 of this embodiment slides to the left as seen in FIG. 23 as the accelerator opening α increases. Namely, if the accelerator opening α increases beyond α₀ in FIG. 2 (α > α₀), the first control valve 16 slides in proportion to the accelerator opening a (along the line C in FIG. 24) within the first intake passage 11. As a result, at the accelerator opening α_{b} in a medium load range for instance, the first control valve 16 is at the solid line position (b), and at the phantom line position (c) at the full load so that the volume of the closed space V is further increased. Thus, since the volume of the closed space V (namely the amount of external air supplied into the closed space V) is increased or decreased according to the engine load, and an exact amount of air corresponding to the accelerator operation amount is supplied from the closed space V into the combustion chamber S in the cylinder 2 in a stabilized manner.

In this embodiment, the first control valve 16 is out of the first intake passage 11 as shown in FIG. 23 in the high load range (especially at the full load). Under that condition, no closed space V is formed in the first intake passage 11 and the external air is directly introduced into the cylinder 2.

FIG. 26 shows the fuel injection duration by the fuel injection device 18 (opening duration of the fuel injection valve 18b) relative to load as the parameter. As shown in the figure, the fuel injection duration (amount of injected fuel) is increased according to the increase in the load so that mixture of appropriate air to fuel ratio is obtained. Here, the amount of external air supplied into the combustion chamber S is determined from values detected by an air flow meter (not shown).

While in this embodiment the fourth control valve is opened and closed mechanically by the camshaft 7, sprockets 41, 43, and chain 42, it may also be arranged as shown in FIG. 23 that the fourth control valve 71 is opened only for the duration of fuel injection by a controller 60 making the opening and closing timings to coincide with those of the fuel injection. In this way, the effect of increased thermal efficiency as described before is not hindered.

It is also possible to arrange to input detected signals from a coolant temperature sensor (not shown) into the controller 60 so that the fourth control valve 71 is constantly open when the engine coolant temperature is lower than a preset value and constantly closed when the engine coolant temperature is higher than the preset value. In this way, poor fuel atomization at low engine temperatures is prevented, ease of starting the engine 1 in cold climate areas is improved, and cleaning of exhaust emissions in cold start is improved.

Here, the term "opening duration" as used in this and other embodiments is defined as the duration in which the intake valve 13 or the second control valve 17 is lifted.

Next, specific examples of the intake control system of this invention with the basic principle described above in reference to the tenth embodiment will be hereinunder described in reference to the eleventh through eigtheenth embodiments.

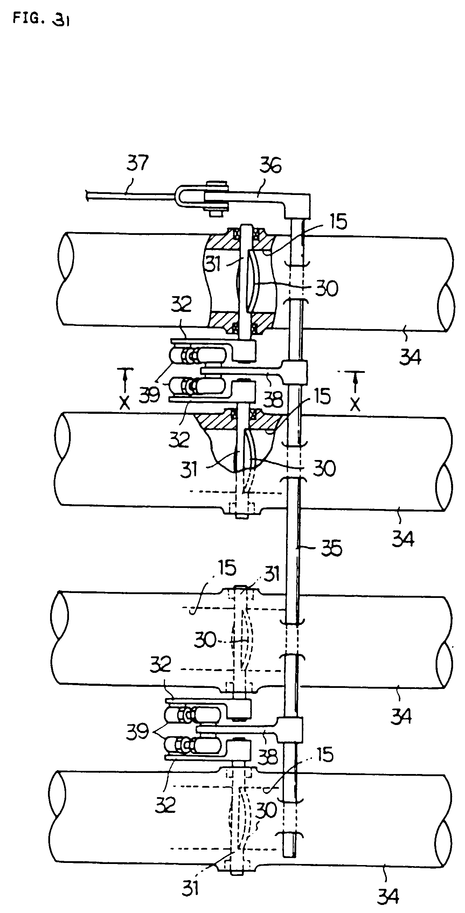

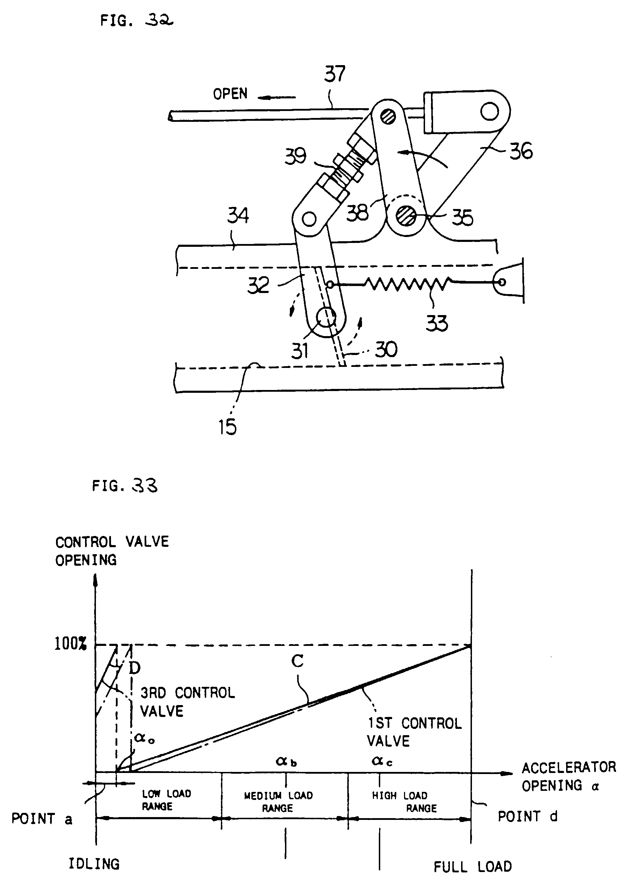

Next, the eleventh embodiment of this invention will be described in reference to FIGs. 29 through 33. FIG. 29 is a side view in cross section of an intake control system of the second embodiment of this invention. FIG. 30 is a plan view in cross section of the same system. FIG. 31 is a plan view partially in cross section of a constitution of a drive system of a third control valve FIG. 32 is a cross section taken along the line X-X in FIG. 31. FIG. 33 is a graph showing the changes in the first control valve travel and the third control valve opening relative to the accelerator opening.

The engine 1 of this embodiment is of an in line, four cylinder, 4 valve type, with each cylinder provided with the piston 3 for free vertical sliding and connected through the connecting rod 4 to the crankshaft (not shown).

FIG. 29 also shows the first intake passage 11 and the exhaust passage 12 provided similarly to the first embodiment for each cylinder. These passages are open to the combustion chamber S at an intake port 11a and an exhaust port 12a respectively opened and closed by the intake valve 13 and the exhaust valve 14 respectively driven by cam shafts 7 and 8 at appropriate timings.

Similarly to the tenth embodiment, another, second intake passage 15 for introducing external air is connected by way of a communication passage Z to an intermediate position (near the intake valve 13) on the first intake passage 11. The fuel injection device 18 is provided on the first intake passage 11 (cylinder head 6).

As shown in FIG. 29, the first and second intake passages 11 and 15 provided for each cylinder are connected to a common intake chamber 19 connected by way of an air flow meter 20 to an air filter 21.

A rod-shaped first control valve 16 is installed for free sliding in the first intake passage 11. One end of the first control valve 16 is formed as a tapered surface 16a and its other end extends through the intake chamber 19 to the outside. For each cylinder, a closed space V is formed in the first intake passage 11 between the first control valve 16 and the intake valve 13. As shown in FIG. 30, each fore-end 16a of the first control valve 16 is formed in a concave shape to minimize the volume of the closed space V. As also shown in FIG. 30, each first intake passage 11 (cylinder head 6) is provided on its side with an adjustment mechanism 22 for preliminary fine adjustment of the volume of the closed space V.

FIG. 29 also shows an accelerator device 23 having a lever 25 capable of rotating about a shaft 24, with the upper end of the lever 25 connected by way of a rod 26 to the end of the first control valve 16 extending outside the intake chamber 19.

The lever 25 is connected at its lower end by way of a rod 27 to an accelerator pedal (not shown) and urged to the closing side of the accelerator by a return spring 28. The numeral 29 in FIG. 26 denotes a stopper for restricting the rotation of the lever 29.

Similarly to the tenth embodiment, a second control valve 17 is provided at the joint area between the first and second intake passages 11 and 15. The second control valve 17 is driven by the cam shaft 7 and constantly closed when the intake valve 13 is open at least at a low load, and open constantly or by an opening corresponding to a given crankshaft rotation angle when the intake valve 13 is closed.

A third control valve 30 is provided in the middle of the second intake passage 15 (on the upstream side of the second control valve 17) so as to be driven in a low load range including idling (the range before the first control valve 16 is driven) so that its opening is changed according to the amount of accelerator operation (accelerator opening).

The constitution of the third control valve 30 will be hereunder described in reference to FIGs. 31 and 32.

One end of the valve shaft 31 of the third control valve 30 is connected to a lever 32 urged by a return spring 33 to the closing side of the third control valve 30.

A common rotary shaft 35 is supported for free rotation on four intake pipes 34 each constituting the second intake passage 15. One end of the rotary shaft 35 is connected to a lever 36 connected by way of a cable 37 to the accelerator pedal (not shown).

A lever 38 is connected at a position between two of the four intake pipes 34 as seen in FIG. 28 and another lever 38 is similarly connected at a position between the rest two intake pipes 34. Each of the levers 38 is connected to each of the opposing levers 32 by way of an adjustable rod 39.

Thus, the intake control device of this embodiment comprises the first intake passage 11, the intake valve 13, the second intake passage 15, the first and second control valves 16 and 17, and the third control valve 30. Its function will be hereinunder described in reference to FIG. 33.

Referring to FIG. 33, the operation range of the engine 1 is divided into a low load range, medium load range, and a high load range with respect to the accelerator opening α. When the accelerator opening α is α₀ (α ≦ α₀), the first control valve 16 is kept inoperative, corresponding to the solid line position (a) in FIG. 29 and the volume of the closed space V in the first intake passage 11 is kept minimum. Also in this operation range, the opening of the third control valve 30 is controlled (along the line D in FIG. 33, by the accelerator opening α (engine load). The third control valve 30 as shown in FIG. 33 is open to some extent even during idling.

Also in the engine 1 of this embodiment, since the second control valve 17 opens as described above when the compression stroke is started when the intake valve 13 is closed, the external air of about the atmospheric pressure introduced by way of the air filter 21 and the air flow meter 20 into the intake chamber 19 is supplied through the second intake passage 15 to the closed space V in the first intake passage 11. While in this embodiment the second control valve 17 is driven by a cam shaft 7 which also drives the intake valve 13, it may also be driven by a separately arranged cam shaft.

In the operation range of α being not greater than α₀ (α ≦ α₀), the opening of the third control valve 30 is controlled as described above in interlocked motion with the accelerator operation along the line D in FIG. 33. In other words, when the cable 37 is pulled in the direction of the arrow in FIG. 29, the lever 36, the rotary shaft 35 and the lever 38 are rotated in a body in the direction of the arrow in FIG. 29 (counterclockwise), the rotation is transmitted through the rod 39 to the lever 32 and the valve shaft 31, and the third control valve is opened corresponding to the accelerator opening α. Since the opening of the third control valve 30 is controlled as described above, the amount of external air supplied to the closed space V in the low load operation range of the accelerator opening α being not greater than α₀ (α ≦ α₀) is controlled according to the engine load. Since the length of the rod 39 is adjustable, difference in opening of the third control valve 30 from cylinder to cylinder is eliminated.

When the intake stroke of the current cycle is started upon opening of the intake valve 13 and closing of the exhaust valve 14, the second control valve 17 is closed as described before and mixture of about the atmospheric pressure is contained in the closed space V. Since the mixture is subjected to rapid adiabatic compression when external air of relatively high pressure is introduced through the second control valve 17 into the closed space V, its temperature is raised and evaporation of fuel contained in it is accelerated. The mixture in the closed space V is drawn during the intake stroke into the combustion chamber S, and undergoes compression stroke and combustion stroke in the combustion chamber S. While the air flow meter 20 is provided for producing a required air to fuel ratio of mixture, it may also be arranged to produce the required air to fuel ratio of mixture by providing detection means for detecting the pressure in the closed space V and according to the detected results.

As described above, since the pressure in the closed space V formed on the upstream side of the intake valve 13 before it opens at least during the low load range is kept at about the atmospheric pressure in this embodiment, the intake stroke is started as shown in FIG. 28 from about the atmospheric pressure. As a result, also in this embodiment, the pumping loss W₂ is made smaller in comparison to the pumping loss W₂' (FIG. 48) of the conventional intake stroke started from a negative pressure. As a result, similarly to the first embodiment, the thermal efficiency and the fuel economy of the engine 1 are improved.

When it is intended to obtain a high power engine by setting a long period of time during which both the intake valve 13 and the exhaust valve 14 are open, since the pressure in the closed space V is kept at about the atmospheric pressure, exhaust gas is less likely to flow back into the first intake passage 11 even if both the intake valve 13 and the exhaust valve 14 are open. As a result, exhaust gas is not drawn back into the combustion chamber S to make idling operation unstable.

As described before, the first control valve 16 of this embodiment slides to the left as seen in FIG. 29 as the accelerator opening α increases. Namely, if the accelerator opening α increases beyond α₀ in FIG. 11 (α > α₀), the opening direction movement of the rod 27 of the accelerator device shown in FIG. 29 is converted to the counterclockwise rotation of the lever 25 about the shaft 27, and the first control valve 16 slides to the left as seen in FIG. 29 in proportion to the accelerator opening α (along the line C in FIG. 33) within the first intake passage 11. As a result, at the accelerator opening α_{b} in a medium load range for instance, the first control valve 16 is at the phantom line position (b) when the accelerator opening is α_{b} in the medium load range shown in FIG. 33 for instance, and at the phantom line position (c) in FIG. 29 when the accelerator opening is α_{c} in the high load range so that the volume of the closed space V is further increased. Thus, since the volume of the closed space V (namely the amount of external air supplied into the closed space V) is increased or decreased according to the engine load, and an exact amount of air corresponding to the accelerator operation amount is supplied from the closed space V into the combustion chamber S in the cylinder 2 in a stabilized manner.

In this embodiment, when the accelerator opening α exceeds α_{c} (α > αc) in the high load range, the first control valve 16 is out of the first intake passage 11. For instance, the first control valve 16 at the full load is located at the phantom line position (d) in FIG. 29, with the first intake passage 11 communicated to the intake chamber 19, and the external air is directly introduced into the cylinder 2 during the intake stroke. Here, as shown in FIG. 29 , the fore-end of the first control valve 16 is formed as a tapered surface 16a, and the internal connecting wall 19a of the first intake passage 11 of the intake chamber 19 is rounded to avoid sudden change in the amount of external air introduced into the first intake passage 11 when the first control valve 16 goes out of the first intake passage 11.

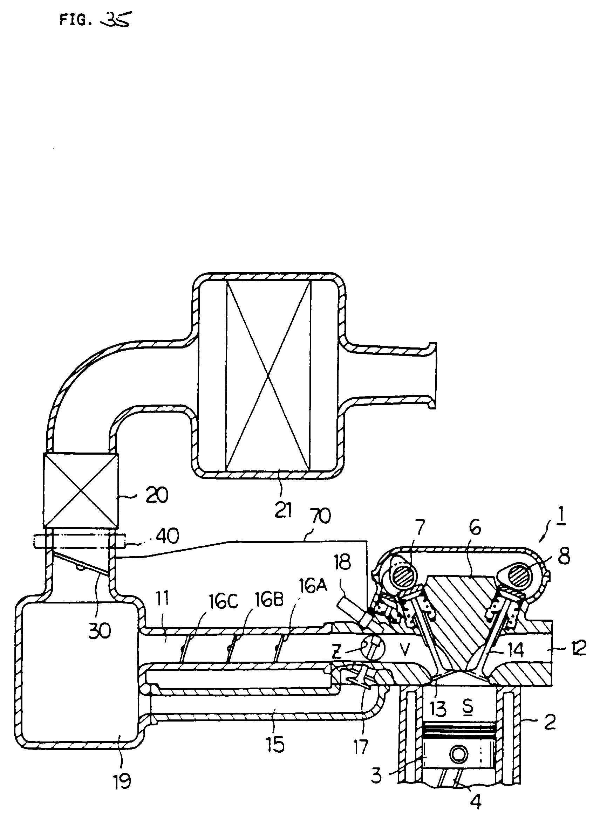

While the third control valve 30 is located in the middle of the second intake passage 15, it may also be located on the downstream side of the air flow meter 20 (Refer to FIG. 35).

If the volume of the closed space V can be made small enough by the arrangement of the first control valve 16 located close enough toward the intake valve 13, the amount of air supplied into the closed space V can also be made small enough, and therefore the third control valve 30 may be omitted.

Also in this embodiment, since a third intake passage 70 is provided as shown in FIG. 29 and external air introduced through the third intake passage 70 is directed to the fuel injection portion at a high speed, atomization of fuel sprayed out of the nozzle ports 18a is accelerated as in the case of the first embodiment, fuel evaporation is further accelerated by the ensuing rapid temperature rise due to the adiabatic compression of the mixture, and combustion efficiency of the mixture in the combustion chamber S is enhanced. Here, it is necessary to contract the third control valve 30 and the first control valve 16 as shown with phantom lines in FIG. 33 to prevent excessive supply of external air because external air is also supplied by the third intake passage 70.

In this embodiment and other embodiments described later, the third intake passage 70 may be arranged either for each cylinder of the engine 1 or may be a single passage up to the middle and thereafter branched for respective cylinders.

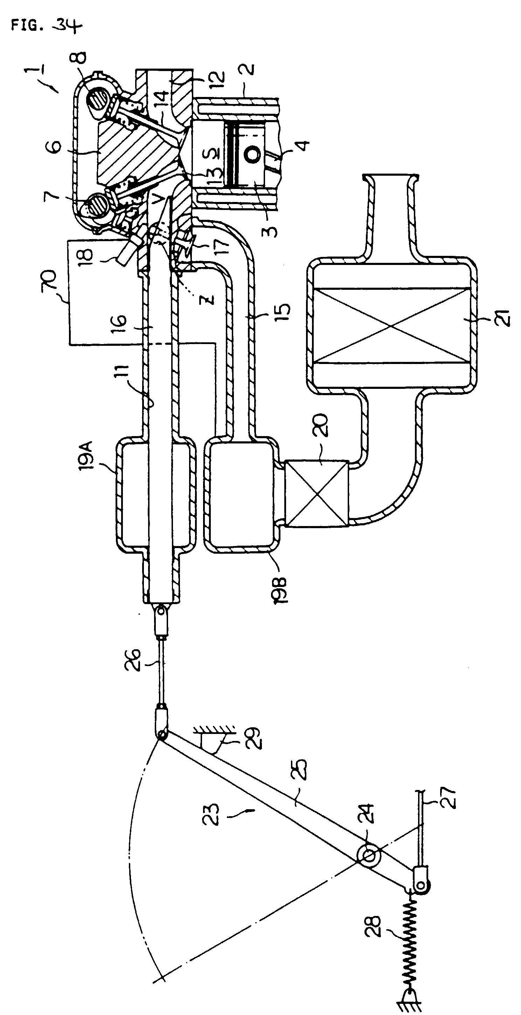

Next, a modification of the embodiment is shown in FIG. 34 which is a side view in cross section of an intake control system of the third embodiment of this invention. In the figure, like numerals denote like parts as those shown in FIG. 29 and their descriptions are omitted.

In the intake control system of the multiple cylinder engine 1 of this embodiment, the first and second intake passages 11 and 15 are made independent of each other, with the first intake passages 11 connected to each other through an intake chamber 19A on one hand, and the second intake passages 15 connected to each other through another intake chamber 19B on the other. Only the intake chamber 19B is connected through the air flow meter 20 to the air filter 21 through which the external air is introduced.

Since the basic principle of the intake control system of this embodiment is the same with that of the eleventh embodiment, the same effect is obtained with this embodiment as that of the eleventh embodiment. However, an additional effect of inertia supercharging is also obtained with this embodiment, which will be hereinunder described.

Since the volume of the closed space V is large immediately after the second control vale 17 is opened in the high load range, the external air supplied through the second control valve 17 to the closed space V flows away from the intake valve 13. As a result, the pressure around the intake valve 13 is temporarily lower than the pressure in the area apart from the intake valve 13.

Next, when the second control valve 17 i closed, the intake valve 13 is opened, and the piston 3 slides down in the cylinder 2 to produce a negative pressure in the cylinder 2, the external air supplied to the closed space V is now drawn toward the intake valve 13 and into the cylinder 2. Here, since the pressure around the intake valve 13 is lower than the pressure in the area apart from the intake valve 13, the external air of a high pressure is introduced into the cylinder 2, which is an inertia super-charging effect to attain a high charging efficiency.

While the supercharging effect described above is obtained not only with multiple cylinder engines but also with single cylinder engines, since the individual first intake passages 11 of this embodiment are connected each other through the intake chamber 19A, the supercharging effect is accordingly enhanced. This is because, immediately after the second control valve 17 is opened, the external air flows in the closed space rapidly away from the intake valve 13 through the second control valve 17 by the negative pressure effect of intake strokes of pistons of other cylinders, and therefore the pressure around the intake valve 13 becomes further lower than the pressure in the area apart from the intake valve 13.

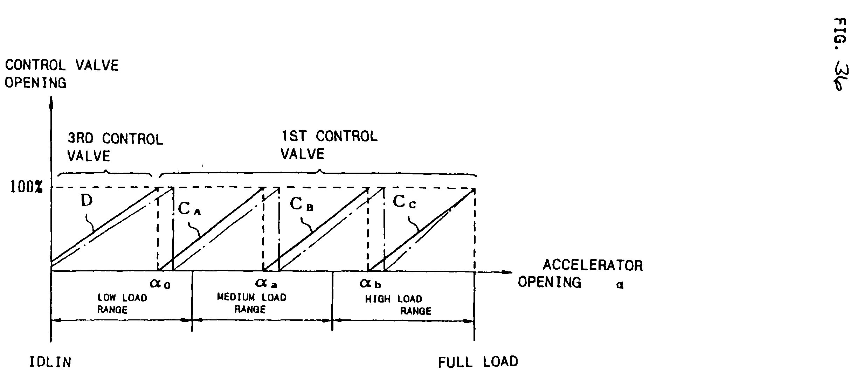

Next, the thirteenth embodiment of this invention will be described in reference to FIGs. 35 and 36. FIG. 35 is a side view in cross section of the intake control system as the fourth embodiment of this invention. FIG. 36 is a graph showing the changes in the openings of the first and third control valves relative to the accelerator opening. In FIG. 35, like parts as those in FIG. 29 are provided with like reference numerals and their descriptions are omitted.

In the intake control system of this embodiment, the first control valves 16A, 16B and 16C are provided at suitable intervals in the first intake passage 11, and the third control valve 30 is provided on the downstream side of the air flow meter 20.

As shown in FIG. 36, when the operation range of the engine 1 is divided according to the accelerator opening α into the low, medium, and high load ranges, in the low load range of the accelerator opening α being α₀ or less (α ≦ α₀), all the first control valves 16A, 16B, 16C are kept inoperative (in the fully closed state). Here, the volume of the closed space V in the first intake passage 14 is kept at a minimum. Also in this operation range, the opening of the third control valve 30 is controlled (along the line D in FIG. 36) by the accelerator opening α (engine load). The third control valve 30 as shown in FIG. 36 is open to some extent even during idling.

Also in the engine 1 of this embodiment, when the intake valve 13 is closed at the end of a previous cycle and the compression stroke is started, the second control valve 17 opens, and external air introduced through the air filter 21, the air flow meter 20, and the third control valve 30 into the intake chamber 19 is supplied through the second intake passage 15 to the closed space V (the space between the first control valve 16A and the intake valve 13) in the first exhaust passage 11.

In the operation range of the accelerator opening α being α₀ or less (α ≦ α₀), the opening of the third control valve 30 is controlled in interlocked motion with the accelerator operation along the line D i FIG. 36, which will be hereinunder described.

In this embodiment, since the first control valve 16A is not located close enough to the intake valve 13, the volume of the closed space V cannot be made small. As a result, if the pressure in the closed space V is about the atmospheric pressure when the intake valve 13 is opened, the amount of external air taken into the cylinder 2, especially during idling, becomes excessive, and more amount of fuel is required to maintain a suitable air to fuel ratio of mixture. As a result, the output of the engine 1 becomes excessive, the idling revolution increases, noise level increases, and the fuel economy is lowered.

For that reason, the third control valve 30 is provided so as to be opened to some extent during idling as described above, and to restrict the amount of air supplied to the closed space V.

The third control valve 30 may also be provided in each of the second intake passages 15 for each cylinder as in the second embodiment (Refer to FIG. 29). Also, if the volume of the closed space V can be made small because of the location of the first control valve 16A close enough to the intake valve 13, the third control valve 30 may be omitted.

In this cycle, when the intake stroke is started with the opening of the intake valve 13 and simultaneous closing of the exhaust valve 14, the second control valve 17 is closed and mixture of about the atmospheric pressure is contained in the closed space V. The mixture in the closed space is supplied to the combustion chamber S and, after being subjected to the compression stroke, undergoes combustion in the combustion chamber S.

In this embodiment as described above, since the pressure in the closed space V before the intake valve 13 opens at least in the low load range of the accelerator opening α being equal to or greater than α₀ is kept about the atmospheric pressure, as shown in FIG. 28, the intake stroke is started from about the atmospheric pressure. As a result, the pumping loss W₂ (Refer to FIG. 28) is kept low, engine efficiency is enhanced, and fuel economy is improved.

When the accelerator opening α exceeds α₀ (α > α₀), the opening of the first control valve 16A increases in proportion to the accelerator opening α (along the line C_{A} in FIG. 36). When the accelerator opening α reaches α_{A} in the medium load range as shown in FIG. 36, the first control valve 16A is wide open and the next first control valve 16B begins to open. The opening of the first control valve 16B increases with the increase in the accelerator opening α along the line C_{B} in FIG. 14, and when it reaches α_{B} in the high load range, the first control valve 16B is wide open, and the next first control valve 16C begins to open. The opening of the first control valve 16C increases with the increase in the accelerator opening α along the line C_{C} in FIG. 36, and becomes wide open at the full load. Therefore, at the full load, all the first control valves 16A, 16B, and 16C are wide open, the first intake passage 11 is connected to the intake chamber 19, and the external air is introduced during the intake stroke directly through the first intake passage 11 into the cylinder 2.

This embodiment may also be applied to an engine with an intake system supercharger 40 as shown in FIG. 35 so as to provide supercharging effect in the medium and higher load ranges. In that case, knocking is effectively prevented from occurring because temperature rise in mixture due to the supercharging effect at the end of the compression stroke can be restricted by cooling effect of the Miller cycle.

Also in this embodiment, while the third intake passage 70 may be arranged as shown in FIG. 35 to accelerate fuel atomization, it is necessary to contract the third control valve 30 and the first control valve 16 as shown with phantom lines in FIG. 36 to prevent excessive supply of external air because external air is also supplied by the third intake passage 70.

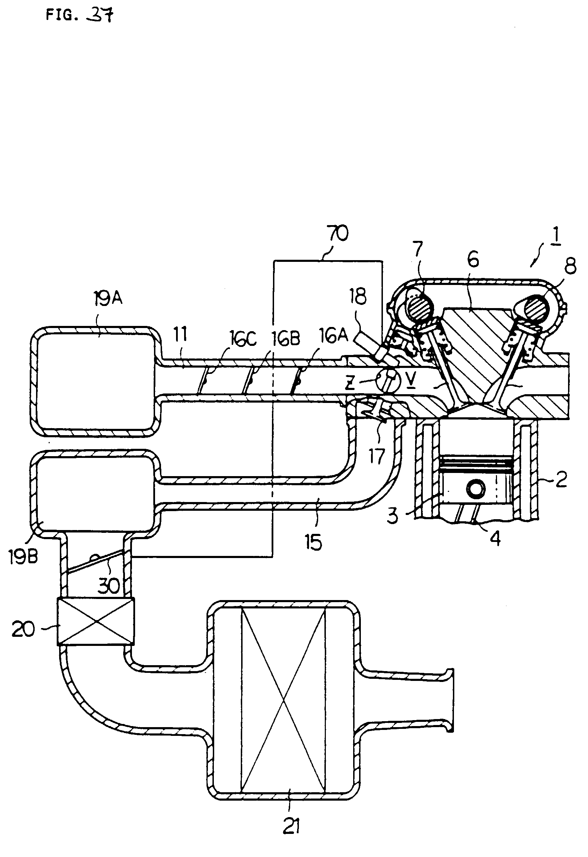

Next, a modification of the thirteenth embodiment is shown in FIG. 37. FIG. 37 is a side view in cross section of the intake control system as the fourth embodiment of this invention. In FIG. 37 like parts as those in FIG. 35 are provided with like reference numerals and their descriptions are omitted.

The intake control system of this embodiment is a modification of the thirteenth embodiment shown in Fig. 35 in which the first and second intake passages 11 and 15 are made independent of each other, with the first intake passages 11 connected to each other through an intake chamber 19A on one hand, and the second intake passages 15 connected to each other through another intake chamber 19B on the other.

Since the basic principle of the intake control system of this embodiment is the same with that of the fourth embodiment, the same effect is obtained with this embodiment as that of the thirteenth embodiment. However, an additional effect of inertia supercharge effect is also obtained with this embodiment as described on the twelfth embodiment.

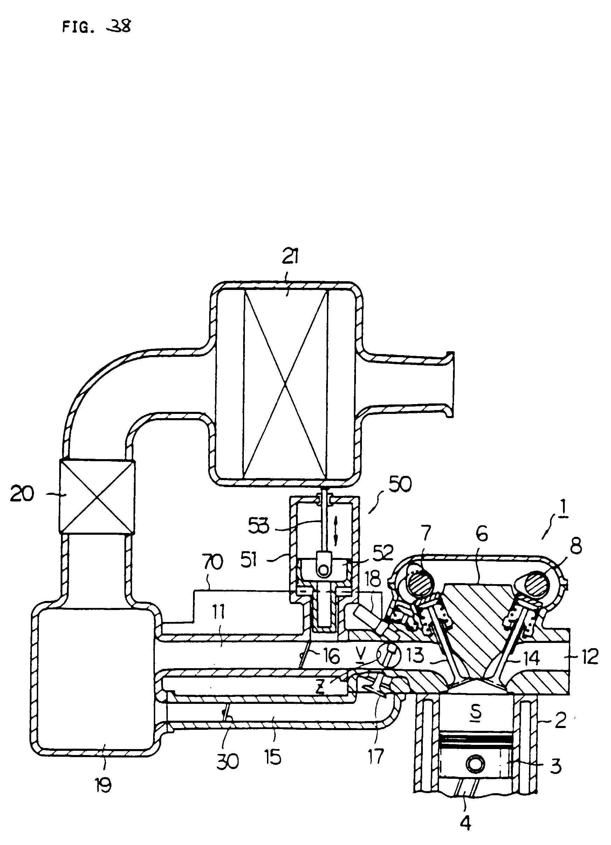

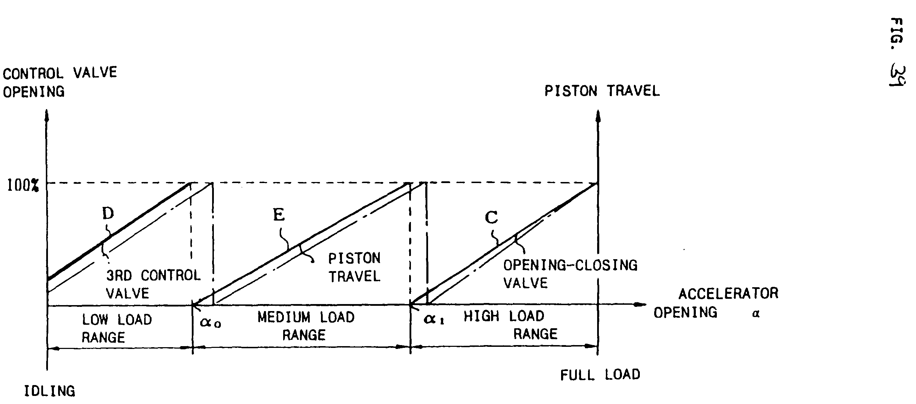

Next, the fifteenth embodiment will be described in reference to FIGs. 38, and 39. FIG. 38 is a side view in cross section of the intake control system as the fifteenth embodiment of this invention. FIG. 39 is a graph showing the changes in the openings of an opening-closing valve and the third control valve and the change in the piston travel of a variable volume mechanism relative to the accelerator opening. In FIG. 38, like parts as those in FIG. 29 are provided with like reference numerals and their descriptions are omitted.

In this embodiment of the intake control system as shown in FIG. 38, a variable volume mechanism 50 is provided on the downstream side of the opening-closing valve 16 disposed in the first intake passage 11 for each cylinder. In this embodiment, the opening-closing valve 16 and the variable volume mechanism 50 (corresponding to the first control valve (16A through 16C) in the tenth through fourteenth embodiments) constitute the first control means.

The variable volume mechanism 50 is for increasing and decreasing the volume of the closed space V produced in the first intake passage 11 according to the accelerator opening, and comprises a piston 52 disposed for free vertical sliding within a cylinder 51 communicated to the first intake passage 11 and linked through a rod 53 to the accelerator device (not shown).

As shown in FIG. 39, when the operation range of the engine 1 is divided according to the accelerator opening α into the low, medium, and high load ranges, in the low load range of the accelerator opening α being α₀ or less (α ≦ α₀), the first control valve 16 and the variable volume mechanism are kept inoperative with the first control valve 16 fully closed and the piston 52 of the variable volume mechanism 50 at the bottom position in the cylinder 51. Here, the volume of the closed space V is kept at a minimum. Also in this operation range, the opening of the third control valve 30 is controlled (along the line D in FIG. 39) by the accelerator opening α (engine load). The third control valve 30 as shown in FIG. 39 is open to some extent even during idling.

Also in this embodiment, when the intake valve 13 is closed at the end of a previous cycle and the compression stroke is started, the second control valve 17 opens and external air introduced through the air filter 21 and the air flow meter 20 is supplied through the second intake passage 15 to the closed space V in the first exhaust passage 11.

When the intake stroke of the current cycle is started with simultaneous opening of the intake valve 13 and closing of the exhaust valve 14, the second control valve 17 is closed, and air from outside is contained in the closed space V. An appropriate amount of fuel is injected through the fuel injection device 18 to the contained air to produce mixture of a required air to fuel ratio. The mixture after being subjected to the compression stroke undergoes combustion in the combustion chamber S.

In this embodiment as described above, since the pressure in the closed space V is kept about the atmospheric pressure before the intake valve 13 opens at least in the low load range of the accelerator opening α being equal to or greater than α₀, as shown in FIG. 6, the intake stroke is started from about the atmospheric pressure. As a result, the pumping loss W₂ (Refer to FIG. 6) is kept low, engine efficiency is enhanced, and fuel economy is improved.

When the accelerator opening α exceeds α₀ (α > α₀), the variable volume mechanism 50 is actuated and the piston 52 of the variable volume mechanism 50 slides upward within the cylinder 51 (along the line E in FIG. 39) in proportion to the accelerator opening α. As a result, the volume of the closed space V increases gradually. When the accelerator opening α reaches α₁ in the high load range as shown in FIG. 39 and the piston 52 reaches the top limit, the first control valve 16 begins to open. The opening of the first control valve 16 increases with the increase in the accelerator opening α along the line C in FIG. 39, and is wide open at the full load. Therefore at the full load, the first intake passage 11 is connected to the intake chamber 19, and the external air is introduced during the intake stroke directly through the first intake passage 11 into the cylinder 2.

Also in this embodiment, the third intake passage 70 may be arranged as shown in FIG. 38 to accelerate fuel atomization. In that case, the openings of the third control valve 30 and the opening-closing valve 16 and the piston travel of the variable volume mechanism 50 are controlled as shown with phantom lines in FIG. 39 relative to the accelerator opening α.

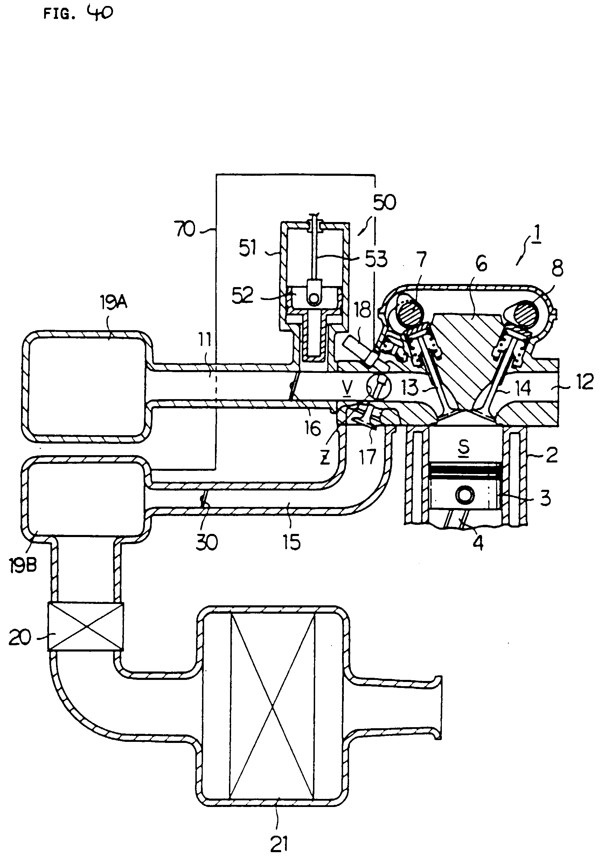

A modification of the fifteenth embodiment is shown in Fig. 40 . FIG. 40 is a side view in cross section of the intake control system as the seventh embodiment of this invention. In FIG. 18, like parts as those in FIG. 38 are provided with like reference numerals and their descriptions are omitted.

The intake control system of this embodiment is a modification of the fifteenth embodiment shown in Fig. 38 in which the first and second intake passages 11 and 15 are made independent of each other, with the first intake passages 11 connected to each other through an intake chamber 19A on one hand, and the second intake passages 15 connected to each other through another intake chamber 19B on the other.

Since the basic principle of the intake control system of this embodiment is the same with that of the sixth embodiment, the same effect is obtained with this embodiment as that of the sixth embodiment. An additional effect of inertia supercharge effect is also obtained with this embodiment as described on the third embodiment.

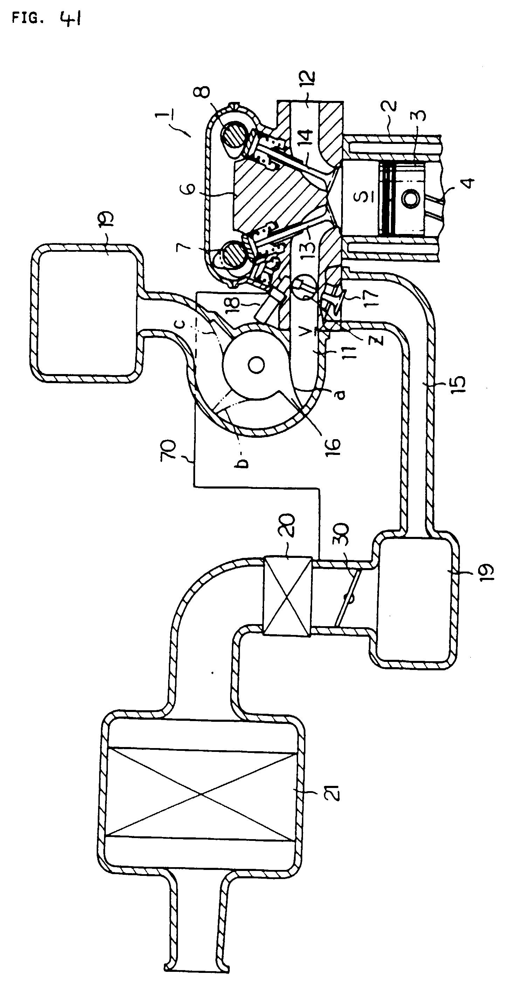

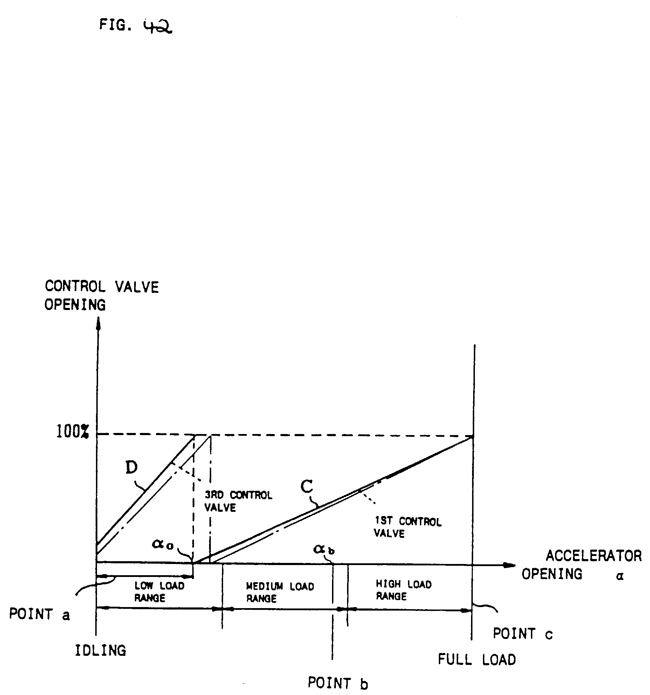

Next, the seventeenth embodiment of this invention will be described in reference to FIGs. 41 and 42. FIG. 41 is a side view in cross section of the intake control system as the eighth embodiment of this invention. FIG. 42 is a graph showing the changes in the openings of the first and third control valves relative to the accelerator opening. In FIG. 19, like parts as those in FIG. 40 are provided with like reference numerals and their descriptions are omitted.

In the intake control system of this embodiment as shown in FIG. 41, the first and second intake passages 11 and 15 are made independent of each other, with the first intake passages 11 connected to each other through an intake chamber 19A on one hand, and the second intake passages 15 connected to each other through another intake chamber 19B on the other.

A first control valve 16 of a rotary type is provided in the middle of the first intake passage 11. A closed space V in the first intake passage 11 is formed between the first control valve 16 and the intake valve 13.

As shown in FIG. 39, when the operation range of the engine 1 is divided according to the accelerator opening α into the low, medium, and high load ranges, in the low load range of the accelerator opening α being α₀ or less (α ≦ α₀), the first control valve 16 is kept inoperative (in the fully closed state), corresponding to the solid line position (a) in FIG. 38. Here, the volume of the closed space V in the first intake passage 11 is kept at a minimum. Also in this operation range, the opening of the third control valve 30 is controlled (along the line D in FIG. 39) by the accelerator opening α. The third control valve 30 as shown in FIG. 39 is open to some extent even during idling.

Also in the engine 1 of this embodiment, when the intake valve 13 is closed at the end of a previous cycle and the compression stroke is started, the second control valve 17 opens and external air introduced through the air filter 21 and the air flow meter 20 is supplied through the second intake passage 15 to the closed space V in the first exhaust passage 11.

When the intake stroke of the current cycle is started with the opening of the intake valve 13 and the closing of the exhaust valve 14, the second control valve 17 is closed, and mixture of a specified air to fuel ratio is contained in the closed space V. The mixture is supplied to the combustion chamber S and, after being subjected to the compression stroke, undergoes combustion in the combustion chamber S.

In this embodiment as described above, since the pressure in the closed space V is kept at about the atmospheric pressure before the intake valve 13 opens at least in the low load range of the accelerator opening α being equal to or greater than α₀, as shown in FIG. 6, the intake stroke is started from about the atmospheric pressure. As a result, the pumping loss W₂ (Refer to FIG. 28) is kept low, engine efficiency is enhanced, and fuel economy is improved.

When the accelerator opening α exceeds α₀ (α > α₀), the first control valve 16 begins to open with the opening changing along the line C in FIG. 42 in proportion to the accelerator opening α. In other words, the first control valve 16, at an accelerator opening α_{b} in the medium load range in FIG. 20 for instance, is in the phantom line position (b), and at the full load the valve 16 is wide open at the phantom line position (c) in FIG. 41. Therefore at the full load, the first intake passage 11 is connected to the intake chamber 19A, and the external air is introduced during the intake stroke directly through the first intake passage 11 into the cylinder 2.

Also in this embodiment, the third intake passage 70 may be arranged as shown in FIG. 41 to accelerate fuel atomization. In that case, the openings of the third control valve 30 and the first control valve 16 and the piston travel of the variable volume mechanism 50 are controlled as shown with phantom lines in FIG. 42 relative to the accelerator opening α.

When a variable compression mechanism (Not shown. For details refer to Tokkai Hei 4-241740) is combined with any of the eight embodiments described above, a pressure indicator diagram is obtained as shown in FIG. 40. According to this, while the pumping loss W₂ increases by a small increment ΔW₂ due to the increase in the combustion chamber volume ΔV, the work W₁ increases by an increment ΔW₁ of an increasing ratio higher than that of the increment ΔW₂. As a result, the work Wᵢ on the diagram expressed by the equation (1) increases, and the thermal efficiency η calculated by the equation (2) increases to further improve fuel economy.

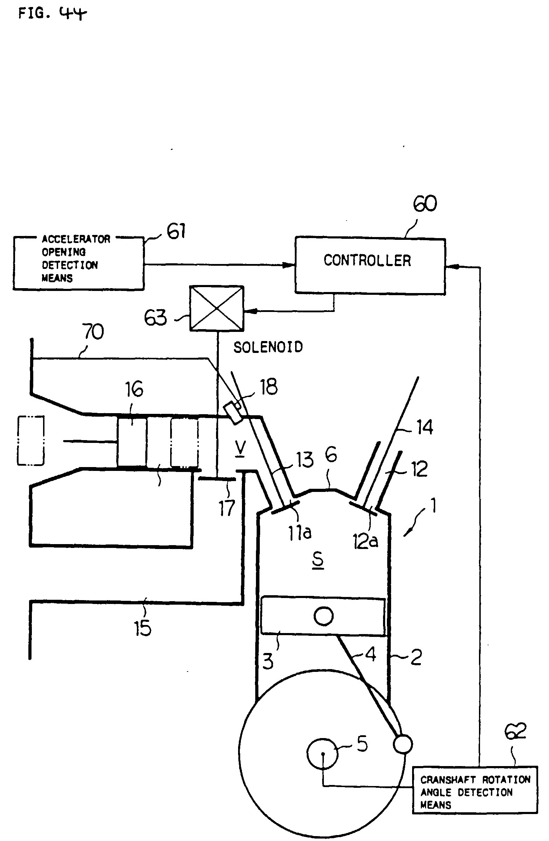

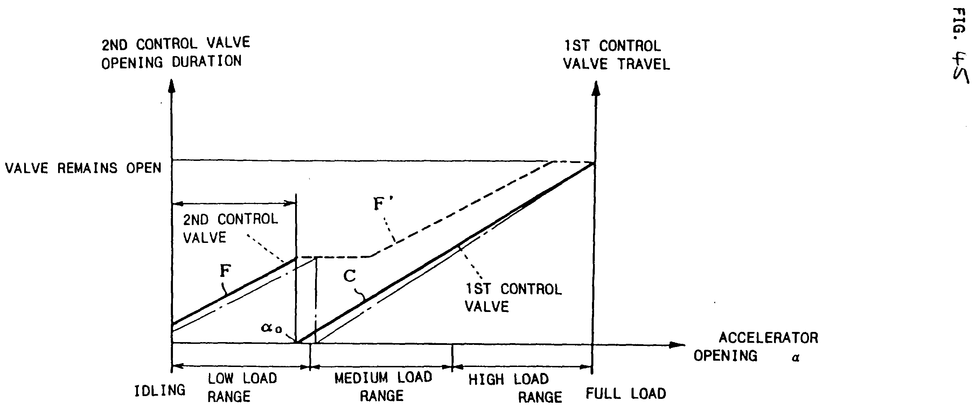

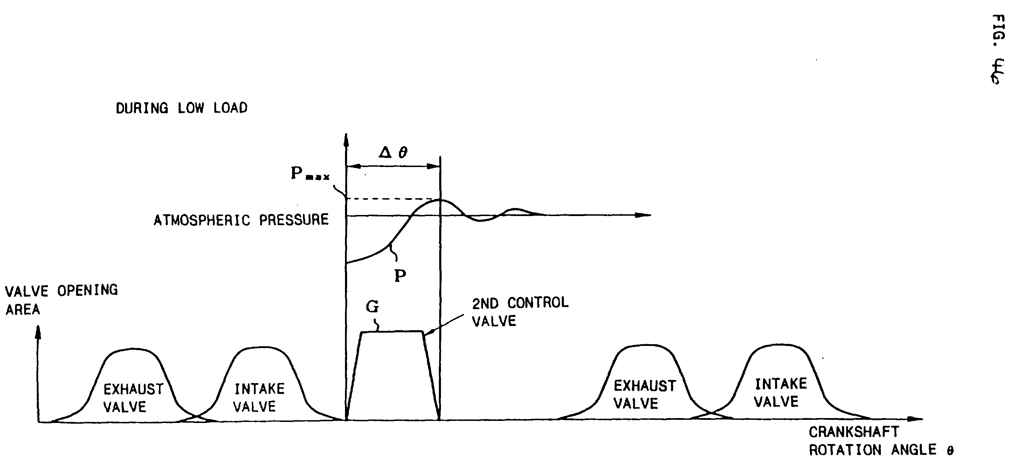

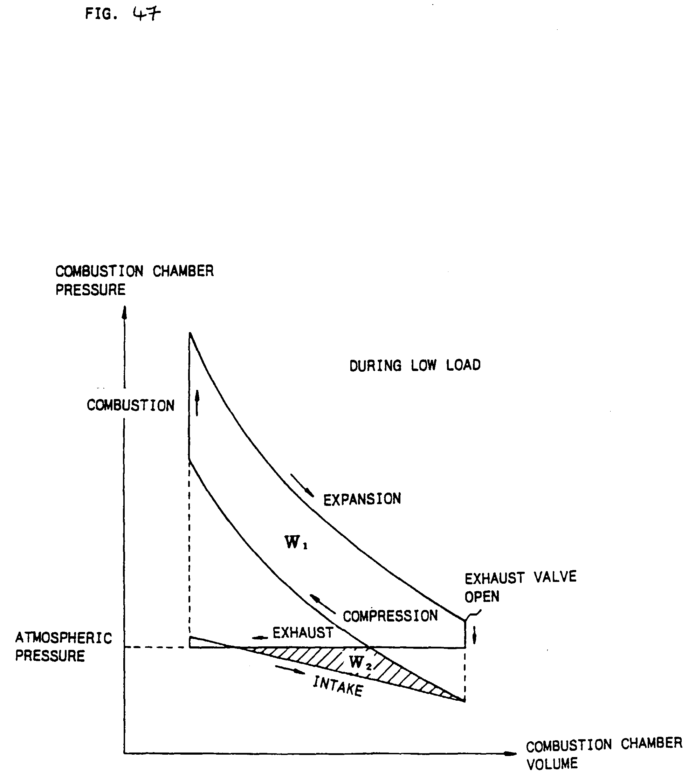

The ninth embodiment of this invention will be hereunder described in reference to FIGs. 44 through 47. FIG. 44 is a schematic cross section of a basic structure of an intake control system as the ninth embodiment of this invention. FIG. 45 is a graph showing the changes in the travel of the first control valve and opening duration of the second control valve relative to the accelerator opening. FIG. 46 is a diagram showing the changes in opening areas of the intake valve, exhaust valve, and second control valve relative to the accelerator opening. FIG. 47 is a pressure indicator diagram of the engine at a low load.

The intake control system of this embodiment is a modification of the first embodiment in which the opening duration of the second control valve 17 at least at a low load is increased or decreased according to the accelerator operation amount (accelerator opening). Therefore in FIG. 44, like parts as those in FIG. 23 are provided with like reference numerals and they will be hereinunder described.

In FIG. 44 are shown a controller 60, accelerator opening detection means 61, and crankshaft rotation angle detection means 62. The second control valve 17 in this embodiment is opened and closed by a solenoid 63.

While thermal efficiency of the engine 1 is improved also in this embodiment by the same effect as that of the first embodiment, the opening duration of the second control valve 17 relative to the accelerator opening α is controlled to follow the line F in FIG. 45 particularly in the low load range (the operation range before the first control valve 16 opens) with the accelerator opening α being equal to or smaller than α₀ (α ≦ α₀).

In other words, signals of an accelerator opening α detected by the accelerator opening detection means 61 and a crankshaft rotation angle Θ detected by the crankshaft rotation angle detection means 62 are input into the controller 60. The controller 60, after the intake valve 13 is closed as shown in FIG. 46, sends a control signal to the solenoid 63 to open the second control valve 17 for a duration (for the duration corresponding to the crankshaft rotation angle ΔΘ in FIG. 46) corresponding to the current accelerator opening α. In FIG. 46, the bent line G shows the change in the opening area of the second control valve 17 driven by the solenoid 63 as in this embodiment.

FIG. 46 shows the change in the pressure P in the closed space V after the second control valve 17 is opened with the accelerator opening α being α₀. Here, the opening duration of the second control valve 17 is set so that the second control valve 17 is closed when the pressure P in the closed space V reaches the maximum value Vₘₐₓ.

By controlling the opening duration of the second control valve 17 as described above, the pressure at the beginning of the intake stroke can be maintained positive as shown in FIG. 47 when the accelerator opening α is α₀. As a result, the pumping loss W₂ can be further reduced, the efficiency of the engine 1 is further improved, and the fuel economy is further improved.

It may also be arranged in the medium and high load ranges where the accelerator opening α exceeds α₀ (α > α₀) that the opening duration of the second control valve 17 is either held constant at the value when the accelerator opening α is α₀ or changed along the broken line F' in FIG. 45.

Also in this embodiment, the third intake passage 70 may be arranged as shown in FIG. 44 to accelerate fuel atomization. In that case, the travel of the first control valve 16 and the opening duration of the second control valve 17 are controlled as shown with phantom lines in FIG. 45. relative to the accelerator opening α.

As evident from the description above, at least at a low load, the pressure on the upstream side of the intake valve is kept at about the atmospheric pressure before the intake valve is opened because the the second control valve is opened while the intake valve is closed and external air of about the atmospheric pressure is supplied through the second intake passage into the closed space between the first control means and the intake valve. As a result, the pumping loss is reduced, the thermal efficiency of the engine is increased, and the fuel economy is improved.

The amount of external air supplied to the first intake passage in a low load condition before the first control valve is driven is increased or decreased according to the accelerator operation amount by means of the third control valve. As a result, even when the minimum volume of the closed space cannot be made small enough for structural reasons before the first control valve is driven in the low load range including idling, the amount of air supplied to the closed space is prevented from becoming excessive and the amount of air supplied to the combustion chamber is optimized.

Moreover, in addition to the effect obtained as described above, an effect of further reducing the pumping loss is obtained by increasing the intake pressure at the start of the intake stroke because it is possible to arrange that the second control valve is closed when the pressure of external air supplied when the second control valve is opened to the closed space in the first intake passage reaches a maximum (positive) pressure.

After the second control valve is closed, the intake valve is opened, and mixture in the closed space is drawn into the cylinder, fuel is injected from the fuel injection device into the closed space where low pressure mixture before the second control valve is opened is remaining. After the injected fuel and the remaining mixture are mixed together and rich mixture is produced, the second control valve is opened and external air of about the atmospheric pressure is introduced into the closed space. As a result, the air first introduced and the mixture are mixed together and subjected to rapid adiabatic compression by the air introduced in succession. As a result, temperature of the mixture rises to bring about the effect to accelerate the evaporation of fuel in the mixture and enhance thermal efficiency.

Furthermore, external air is introduced through the third intake passage while fuel is injected from the fuel injection device. Here, a strong negative pressure is prevailing in the closed space. Since the contracted portion is provided in the external air outlet portion of the third intake passage, external air is blown at a high speed to the fuel injection portion and accelerates fuel atomization. Asa a result, an effect is obtained that fuel evaporation is further accelerated by the rapid temperature rise described above, and combustion efficiency is further enhanced.

Since the fourth control valve is opened by the amount corresponding to a given crankshaft rotation angle, the effect of the invention of claim 1 (enhancing the thermal efficiency of the engine by minimizing the pumping loss) is maintained while obtaining said effect (enhancing the thermal efficiency by accelerating fuel evaporation).

Finally, an effect is obtained that fuel atomization is prevented from deteriorating when the engine temperature is low, the ease of engine start in cold areas is improved, and cleaning of exhaust emissions during a cold start is improved.

## Claims

1. Internal combustion engine of the four cycle type, comprising:
a cylinder (2) having a cylinder bore with a piston (3) slidably received therein to define a combustion chamber,
an intake passage arrangement (11,15) for supplying air into said combustion chamber and an exhaust passage arrangement (12) for discharging combustion gas from said combustion chamber,
at least one intake valve (13) and one exhaust valve (14) for opening and closing the communication of said intake and exhaust passage arrangements (11,15;12) with said combustion chamber,
said intake passage arrangement (11,15) being provided with a second control valve means (17) disposed upstream from said intake valve (13), for opening and closing the intake passage arrangement (11,15) at least partially,
said second control valve means (17) being opened and closed substantially anti-cyclically with respect to the intake valve (13), i.e. said second control valve means (17) being opened when said intake valve (13) being closed and being closed when said intake valve (13) being opened,
a first control valve means (16,50) being provided for varying the volume of a portion (V) of the intake passage arrangement (11,15) upstream from said intake valve (13) and downstream from said second control valve means (17),
**characterized in that**
said intake passage arrangement comprises a first intake passage (11) communicated with the combustion chamber via the intake valve (13) and a second intake passage (15) being communicated with said first intake passage (11) upstream from said intake valve (13),
said second control valve means (17) is provided for opening and closing the second intake passage (15) opening into said first intake passage (11),
said first control valve means (16) is provided for varying the volume of said portion (V) of the first intake passage (11) including the communication thereof with said second intake passage (15) in response to an accelerator operation for controlling the engine,
said first control valve means (16) is adjustable between positions (a) for defining a low volume of said portion (V) of the first intake passage (11) for low load conditions of the engine, and positions (b) for defining a large volume of said intake passage portion (V) for intermediate engine load conditions, and a position (c) for communicating the first intake passage (11) with the surrounding in parallel with the second intake passage (15) or for communicating the first intake passage (11) with a first intake chamber (19A), whereas the second intake passage (15) communicates with a separate second intake chamber (19B), for high engine load conditions.

2. Internal combustion engine according to claim 1, **characterized in that** at least under low load operating conditions, said second control valve means (17) is in its closing position when said intake valve (13) is open and in its opened position either constantly or for a period corresponding to a predetermined crankshaft rotation angle (Δθ), when said intake valve (13) is closed.

3. Internal combustion engine according to claim 2, **characterized in that** said second control valve means includes a poppet valve (17) operated by an intake cam shaft (7).

4. Internal combustion engine according to claim 1 or 2, **characterized in that** said second control valve includes a control valve (17) operated by a solenoid (63) in response to an accelerator operation for controlling the engine.

5. Internal combustion engine according to at least one of claims 1 to 4, **characterized in that** a controller (60) is provided for adjusting the opening period of said second control valve means (17) at least under low load engine conditions in response to the accelerator operation.

6. Internal combustion engine according to at least one of claims 1 to 5, **characterized in that** said first control valve means includes a piston valve means (16) slidable in said first intake passage (11) between positions (a, b) corresponding to different volumes of the intake passage portion (V) between the intake valve (13) and the piston valve means (16) and a position (c) communicating the first intake passage (11) with the surrounding in parallel with the second intake passage (15).

7. Internal combustion engine according to at least one of claims 1 to 5, **characterized in that** said first control valve means (16) includes a plurality of throttle valves (16A, 16B, 16C) disposed in series in said first intake passage (11) upstream from the communication thereof with the second intake passage (15), each of said throttle valves (16a, 16b, 16c) being adapted to open and close the first intake passage (11) in response to an accelerator operation for controlling the engine.

8. Internal combustion engine according to at least one of claims 1 to 5, **characterized in that** said first control valve means includes a piston mechanism (50) for varying the volume of the intake passage portion (V) in which the first intake passage (11) is communicated with the second intake passage (15) and a throttle valve (16) disposed in said first intake passage (11) upstream from said piston mechanism (50).

9. Internal combustion engine according to at least one of claims 1 to 5, **characterized in that** the first control valve means includes a rotatory control valve (16).

10. Internal combustion engine according to at least one of claims 1 to 9, **characterized in that** a third control valve (30) is provided in the second intake passage (15) upstream from the second control valve means (17) for controlling the flow of air through said second intake passage (15) in response to the accelerator operation for controlling the engine.

11. Internal combustion engine according to claim 10, **characterized in that** said third control valve (30) is adjustable in the low load range of the engine in response to the accelerator operation between a partially opened position corresponding to the idling condition of the engine and a fully opened position corresponding to the transition from the low load range to the intermediate load range of the engine.

12. Internal combustion engine according to at least one of claims 1 to 11, **characterized in that** a fuel injection device (18) is provided for injecting fuel into the intake passage arrangement (11, 15) upstream from the intake valve (13).

13. Internal combustion engine according to claim 12, **characterized in that** the fuel injection device (18) is associated with the first intake passage (11) for injecting fuel into the same downstream from the first control valve means (17).

14. Internal combustion engine according to claim 12 or 13, **characterized in that** a controller (60) is provided for controlling the fuel injection device (18) to inject fuel at least during low load operating conditions when the intake valve (13) and the second control valve means (17) are in their closing positions.

15. Internal combustion engine according to claim 14, **characterized in that** a fuel injection period of the fuels injection device is adjusted in response to engine load.

16. Internal combustion engine according to at least one of claims 12 to 15, **characterized in that** a third intake passage (70) is provided for supplying intake air to a fuel injection portion (18a) of said fuel injection device (18).

17. Internal combustion engine according to claim 16, **characterized in that** said third intake passage (70) is provided with an orifice at its end at the fuel injection device (18).

18. Internal combustion engine according to claim 16 or 17, **characterized in that** a fourth control valve (71) is provided in said third intake passage (70) for controlling the airflow therethrough.

19. Internal combustion engine according to claim 18, **characterized in that** said fourth control valve (71) is operated through the intake cam shaft (7).

20. Internal combustion engine according to claim 18 or 19, **characterized in that** said fourth control valve (71) is opened for a period corresponding to a predetermined crank shaft rotation angle when the intake valve (13) is in its closed position and before the second control valve means (17) is in its opened position.

21. Internal combustion engine according to claim 18 or 19, **characterized in that** a control unit connected to a solenoid for operating the fourth control valve (71) is provided for controlling the opening period and timing of said fourth control valve (71) in accordance with the operation of the fuel injection device (18).

22. Internal combustion engine according to at least one of claims 18 to 21, **characterized in that** a temperature control unit is provided for opening said fourth control valve (71) when an engine coolant temperature is below a preset value and for closing said fourth control valve (71) when said coolant temperature is higher than said preset value.

## Patentansprüche

1. Viertakt-Brennkraftmaschine, die umfasst:
einen Zylinder (2) mit einer Zylinderbohrung, in der ein Kolben (3) zur Bestimmung einer Brennkammer gleitbar aufgenommen ist,
eine Einlasskanal-Anordnung (11, 15) zum Zuführen von Luft in die Brennkammer und eine Auslasskanal-Anordnung (12) zum Entlassen von Verbrennungsgas von der Brennkammer,
mindestens ein Einlassventil (13) und ein Auslassventil (14) zum Öffnen und Verschließen der Verbindung der Einlass- und der Auslasskanal-Anordnungen (11, 15; 12) mit der Brennkammer,
wobei die Einlasskanal-Anordnung (11, 15) mit einem zweiten, zustromseitig von dem Einlassventil (13) angeordneten Steuerventilmittel (17) versehen ist, um die Einlasskanal-Anordnung (11, 15) zumindest teilweise zu öffnen und zu schließen,
welches zweite Steuerventilmittel (17) im wesentlichen antizyklisch mit Bezug auf das Einlassventil (13) geöffnet und geschlossen wird, d.h. das zweite Steuerventilmittel (17) geöffnet wird, wenn das Einlassventil (13) geschlossen wird, und geschlossen wird, wenn das Einlassventil (13) geöffnet wird,
ein erstes Steuerventilmittel (16, 50) vorgesehen ist, um das Volumen eines Abschnittes (V) der Einlasskanal-Anordnung (11, 15) zustromseitig von dem Einlassventil (13) und abstromseitig von dem zweiten Steuerventilmittel (17) zu verändern,
**dadurch gekennzeichnet, dass**
die Einlasskanal-Anordnung einen ersten Einlasskanal (11), der mit der Brennkammer über das Einlassventil (13) verbunden ist, und einen zweiten Einlasskanal (15) umfasst, der mit dem ersten Einlasskanal (11) zustromseitig von dem Einlassventil (13) verbunden ist,
das zweite Steuerventilmittel (17) zum Öffnen und Schließen des in den ersten Einlasskanal (11) mündenden zweiten Einlasskanals (15) vorgesehen ist,
das erste Steuerventilmittel (16) vorgesehen ist, um das Volumen des Abschnittes (V) des ersten Einlasskanals (11), der die Verbindung desselben mit dem zweiten Einlasskanal (15) enthält, in Reaktion auf eine Gaspedalbetätigung zum Steuern der Maschine zu verändern,
das erste Steuerventilmittel (16) zwischen Positionen (a) zum Bestimmen eines niedrigen Volumens des Abschnittes (V) des ersten Einlasskanals (11) für Niedrig-Last-Bedingungen der Maschine, Positionen (b) zum Bestimmen eines großen Volumens des Einlasskanal-Abschnittes (V) für Zwischen-Last-Bedingungen der Maschine, und einer Position (c) zum Verbinden des ersten Einlasskanals (11) mit der Umgebung parallel zu dem zweiten Einlasskanal (15) oder für das Verbinden des ersten Einlasskanals (11) mit einer ersten Einlasskammer (19A) verstellbar ist, während der zweite Einlasskanal (15) sich mit einer separaten zweiten Einlasskammer (19B) verbindet, für Hoch-Last-Bedingungen der Maschine.

2. Brennkraftmaschine nach Anspruch 1, **dadurch gekennzeichnet, daß** mindestens unter Niedrig-Last-Betriebsbedingungen das zweite Steuerventilmittel (17) in seiner geschlossenen Position ist, wenn das Einlassventil (13) offen ist, und entweder konstant oder während eines einem vorgegebenen Kurbelwellen-Drehwinkel (Δθ) entsprechenden Zeitabschnittes in seiner geöffneten Position ist, wenn das Einlassventil (13) geschlossen ist.

3. Brennkraftmaschine nach Anspruch 2, **dadurch gekennzeichnet, daß** das zweite Steuerventilmittel ein durch eine Einlass-Nockenwelle (7) betätigtes Tellerventil (17) enthält.

4. Brennkraftmaschine nach Anspruch 1 oder 2, **dadurch gekennzeichnet, daß** das zweite Steuerventil ein durch einen Elektromagneten (63) in Reaktion auf eine Gaspedalbetätigung zum Steuern der Maschine betätigtes Steuerventil (17) enthält.

5. Brennkraftmaschine nach mindestens einem der Ansprüche 1 bis 4, **dadurch gekennzeichnet, daß** eine Steuerung (60) vorgesehen ist zum Einstellen der Öffnungszeitlänge des zweiten Steuerventilmittels (17) mindestens unter Niedrig-Last-Bedingungen der Maschine in Reaktion auf die Gaspedalbetätigung.

6. Brennkraftmaschine nach mindestens einem der Ansprüche 1 bis 5, **dadurch gekennzeichnet, daß** das erste Steuerventilmittel ein Kolbenventilmittel (16) enthält, das in dem ersten Einlasskanal (11) zwischen Positionen (a, b) gleitbar ist, die unerschiedlichen Volumen des Einlasskanal-Abschnitts (V) zwischen dem Einlassventil (13) und dem Kolbenventilmittel (16) entsprechen, und einer Position (c), die den ersten Einlasskanal (11) mit der Umgebung parallel zu dem zweiten Einlasskanal (15) verbindet.

7. Brennkraftmaschine nach mindestens einem der Ansprüche 1 bis 5, **dadurch gekennzeichnet, daß** das erste Steuerventilmittel (16) ein Vielzahl von Drosselventilen (16A, 16B, 16C) enthält, die in Reihe in dem ersten Einlasskanal (11) zustromseitig von der Verbindung desselben mit dem zweiten Einlasskanal (15) angeordnet sind, wobei jedes Drosselventil (16a, 16b, 16c) ausgelegt ist, den ersten Einlasskanal (11) in Reaktion auf eine Gaspedalbetätigung zum Steuern der Maschine zu öffnen und zu schließen.

8. Brennkraftmaschine nach mindestens einem der Ansprüche 1 bis 5, **dadurch gekennzeichnet, daß** das erste Steuerventilmittel einen Kolbenmechanismus (50) zum Verändern des Volumens des Einlasskanal-Abschnitts (V), in welchem der erste Einlasskanal (11) mit dem zweiten Einlasskanal (15) verbunden ist, und ein in dem ersten Einlasskanal (11) zustromseitig von dem Kolbenmechanismus (50) angeordnetes Drosselventil (16) enthält.

9. Brennkraftmaschine nach mindestens einem der Ansprüche 1 bis 5, **dadurch gekennzeichnet, daß** das erste Steuerventilmittel ein Dreh-Steuerventil (16) enthält.

10. Brennkraftmaschine nach mindestens einem der Ansprüche 1 bis 9, **dadurch gekennzeichnet, daß** ein drittes Steuerventil (30) in dem zweiten Einlasskanal (15) zustromseitig von dem zweiten Steuerventilmittel (17) zum Steuern der Luftströmung durch den zweiten Einlasskanal (15) in Reaktion auf die Gaspedalbetätigung zum Steuern der Maschine vorgesehen ist.

11. Brennkraftmaschine nach Anspruch 10, **dadurch gekennzeichnet, daß** das dritte Steuerventil (30) in den Niedrig-Last-Bereich der Maschine in Abhängigkeit von der Gaspedalbetätigung zwischen einer dem Leerlauf-Zustand der Maschine entsprechenden teilweise geöffneten Position und einer dem Übergang vom Niedrig-Last-Bereich zu dem Zwischen-Last-Bereich der Maschine entsprechenden voll geöffneten Position einstellbar ist.

12. Brennkraftmaschine nach mindestens einem der Ansprüche 1 bis 11, **dadurch gekennzeichnet, daß** ein Kraftstoff-Einspritzgerät (18) vorgesehen ist, um Kraftstoff zustromseitig von dem Einlassventil (13) in die Einlasskanal-Anordnung (11, 15) einzuspritzen.

13. Brennkraftmaschine nach Anspruch 12, **dadurch gekennzeichnet, daß** das Kraftstoff-Einspritzgerät (18) dem ersten Einlasskanal (11) zugeordnet ist, um Kraftstoff abstromseitig von dem ersten Steuerventilmittel (17) in denselben einzuspritzen.

14. Brennkraftmaschine nach Anspruch 12 oder 13, **dadurch gekennzeichnet, daß** eine Steuerung (60) vorgesehen ist, um das Kraftstoff-Einspritzgerät (18) mindestens während Niedrig-Last-Betriebsbedingungen zum Einspritzen von Kraftstoff zu steuern, wenn das Einlassventil (13) und das zweite Steuerventilmittel (17) in ihren Schließpositionen sind.

15. Brennkraftmaschine nach Anspruch 14, **dadurch gekennzeichnet, daß** eine Kraftstoff-Einspritzzeitlänge des Kraftstoff-Einspritzgeräts in Reaktion auf die Maschinenlast eingestellt wird.

16. Brennkraftmaschine nach mindestens einem der Ansprüche 12 bis 15, **dadurch gekennzeichnet, daß** ein dritter Einlasskanal (70) vorgesehen ist, um Einlassluft zu einem Kraftstoff-Einspritzabschnitt (18) des Kraftstoff-Einspritzgeräts (18) zuzuführen.

17. Brennkraftmaschine nach Anspruch 16, **dadurch gekennzeichnet, daß** der dritte Einlasskanal (70) an seinem Ende an dem Kraftstoff-Einspritzgerät (18) mit einer Düse versehen ist.

18. Brennkraftmaschine nach Anspruch 16 oder 17, **dadurch gekennzeichnet, daß** ein viertes Steuerventil (71) in dem dritten Einlasskanal (70) vorgesehen ist, um den Luftstroms dort hindurch zu steuern.

19. Brennkraftmaschine nach Anspruch 18, **dadurch gekennzeichnet, daß** das vierte Steuerventil (71) durch die Einlass-Nockenwelle (7) betätigt wird.

20. Brennkraftmaschine nach Anspruch 18 oder 19, **dadurch gekennzeichnet, daß** das vierte Steuerventil (71) während einen Zeitraum geöffnet wird, der einem vorgegebenen Kurbelwellen-Drehwinkel entspricht, wenn das Einlassventil (13) sich in seiner geschlossenen Position befindet und bevor das zweite Steuerventilmittel (17) in seiner geöffneten Position ist.

21. Brennkraftmaschine nach Anspruch 18 oder 19, **dadurch gekennzeichnet, daß** eine an einem Elektromagneten zum Betätigen des vierten Steuerventils (71) angeschlossene Steuereinheit vorgesehen ist, um die Öffnungszeitlänge und die Zeitgabe des vierten Steuerventils (71) entsprechend dem Betrieb des Kraftstoff-Einspritzgeräts (18) zu steuern.

22. Brennkraftmaschine nach mindestens einem der Ansprüche 18 bis 21, **dadurch gekennzeichnet, daß** eine Temperatur-Steuereinheit vorgesehen ist, um das vierte Steuerventil (71) zu öffnen, wenn eine Maschinenkühlmittel-Temperatur sich unter einem vorgegebenen Wert befindet, und das vierte Steuerventil (71) zu schließen, wenn die Kühlmittel-Temperatur höher als der vorgegebene Wert ist.

## Revendications

1. Moteur à combustion interne du type à quatre temps, comprenant :
un cylindre (2) ayant un alésage avec un piston (3) logé de façon coulissante à l'intérieur pour définir une chambre de combustion,
un dispositif formant passage d'aspiration (11, 15) pour introduire de l'air dans ladite chambre de combustion et un dispositif formant passage d'évacuation (12) pour décharger le gaz de combustion de ladite chambre de combustion,
au moins une soupape d'admission (13) et une soupape d'évacuation (14) pour ouvrir et fermer la communication dudit dispositif formant passage d'aspiration et d'évacuation (11, 15 ; 12) avec ladite chambre de combustion,
ledit dispositif formant passage d'aspiration (11, 15) étant doté d'un deuxième moyen formant soupape de commande (17) disposé en amont de ladite soupape d'aspiration (13), pour ouvrir et fermer le dispositif formant passage d'aspiration (11, 15) au moins partiellement, ledit deuxième moyen formant soupape de commande (17) étant ouvert et fermé sensiblement et de façon anti-cyclique par rapport à la soupape d'admission (13), c'est-à-dire que ledit deuxième moyen formant soupape de commande (17) est ouvert lorsque ladite soupape d'admission (13) est fermée et est fermé lorsque ladite soupape d'admission (13) est ouverte,
un premier moyen formant soupape de commande (16, 50) qui est prévu pour modifier le volume d'une partie (V) du dispositif formant passage d'aspiration (11, 15) en amont de ladite soupape d'admission (13) et en aval dudit deuxième moyen formant soupape de commande (17),
caractérisé en ce que
ledit dispositif formant passage d'aspiration comprend un premier passage d'aspiration (11) en communication avec la chambre de combustion via la soupape d'admission (13) et un deuxième passage d'aspiration (15) qui est en communication avec ledit premier passage d'aspiration (11) en amont de ladite soupape d'admission (13),
ledit deuxième moyen formant soupape de commande (17) est prévu pour ouvrir et fermer le deuxième passage d'aspiration (15) ouvrant dans ledit premier passage d'aspiration (11), ledit premier moyen formant soupape de commande (16) est prévu pour modifier le volume de ladite partie (V) du premier passage d'aspiration (11) comprenant la communication de celui-ci avec ledit deuxième passage d'aspiration (15) en réaction à un actionnement de l'accélérateur pour commander le moteur,
ledit premier moyen formant soupape de commande (16) peut être ajusté entre des positions (a) afin de définir un faible volume de ladite partie (V) du premier passage d'aspiration (11) pour des conditions de charge faible du moteur, et des positions (b) afin de définir un grand volume de ladite partie formant passage d'aspiration (V) pour des conditions de charge intermédiaire du moteur, et une position (c) afin de mettre en communication le premier passage d'aspiration (11) avec l'entourage parallèlement au deuxième passage d'aspiration (15) ou pour mettre en communication le premier passage d'aspiration (11) avec une première chambre d'aspiration (19A), alors que le deuxième passage d'aspiration (15) communique avec une deuxième chambre d'aspiration distincte (19B), pour des conditions de charge élevée du moteur.

2. Moteur à combustion interne selon la revendication 1, caractérisé en ce que dans des conditions de fonctionnement à charge faible, ledit deuxième moyen formant soupape de commande (17) est dans sa position de fermeture lorsque ladite soupape d'admission (13) est ouverte et dans sa position ouverte soit en permanence, soit pour une période correspondant à un angle de rotation prédéterminé de l'arbre-manivelle (Δθ), lorsque ladite soupape d'admission (13) est fermée.

3. Moteur à combustion interne selon la revendication 2, caractérisé en ce que ledit deuxième moyen formant soupape de commande comprend une soupape à champignon (17) actionnée par un arbre à came d'aspiration (7).

4. Moteur à combustion interne selon la revendication 1 ou 2, caractérisé en ce que ladite deuxième soupape de commande comprend une soupape de commande (17) actionnée par un électro-aimant à noyau plongeur (63) en réaction à un actionnement de l'accélérateur pour commander le moteur.

5. Moteur à combustion interne selon l'une au moins des revendications 1 à 4, caractérisé en ce qu'un mécanisme régulateur (60) est prévu pour ajuster le moment d'ouverture dudit deuxième moyen formant soupape de commande (17) au moins dans des conditions de faible charge du moteur en réaction à l'actionnement de l'accélérateur.

6. Moteur à combustion interne selon l'une au moins des revendications 1 à 5, caractérisé en ce que ledit premier moyen formant soupape de commande comprend un moyen formant robinet à piston (16) pouvant coulisser dans ledit premier passage d'aspiration (11) entre des positions (a, b) correspondant à différents volumes de la partie formant passage d'aspiration (V) entre la soupape d'admission (13) et le moyen formant robinet à piston (16) et une position (c) mettant en communication le premier passage d'aspiration (11) avec l'entourage parallèlement au deuxième passage d'aspiration (15).

7. Moteur à combustion interne selon l'une au moins des revendications 1 à 5, caractérisé en ce que ledit premier moyen formant soupape de commande (16) comprend une pluralité de soupapes d'étranglement (16A, 16B, 16C) disposées en série dans ledit premier passage d'aspiration (11) en amont de la voie de communication de celui-ci avec le deuxième passage d'aspiration (15), chacune desdites soupapes d'étranglement (16a, 16b, 16c) étant adaptées pour ouvrir et fermer le premier passage d'aspiration (11) en réaction à l'actionnement de l'accélérateur pour commander le moteur.

8. Moteur à combustion interne selon l'une au moins des revendications 1 à 5, caractérisé en ce que ledit premier moyen formant soupape de commande comprend un mécanisme à piston (50) pour modifier le volume de la partie formant passage d'aspiration (V) dans laquelle le premier passage d'aspiration (11) est en communication avec le deuxième passage d'aspiration (15) et une soupape d'étranglement (16) disposée dans ledit premier passage d'aspiration (11) en amont dudit mécanisme à piston (50).

9. Moteur à combustion interne selon l'une au moins des revendications 1 à 5, caractérisé en ce que le premier moyen formant soupape de commande comprend une soupape de commande rotative (16).

10. Moteur à combustion interne selon l'une au moins des revendications 1 à 9, caractérisé en ce qu'une troisième soupape de commande (30) est prévue dans le deuxième passage d'aspiration (15) en amont du deuxième moyen formant soupape de commande (17) pour commander l'écoulement d'air dans ledit deuxième passage d'aspiration (15) en réaction à l'actionnement de l'accélérateur pour commander le moteur.

11. Moteur à combustion interne selon la revendication 10, caractérisé en ce que ladite troisième soupape de commande (30) est réglable dans la plage de faible charge du moteur en réaction à l'actionnement de l'accélérateur entre une position partiellement ouverte correspondant à la condition de marche à vide du moteur et une position totalement ouverte correspondant à la transition de la plage de faible charge à la plage de charge intermédiaire du moteur.

12. Moteur à combustion interne selon l'une au moins des revendications 1 à 11, caractérisée en ce qu'un dispositif d'injection de carburant (18) est prévu pour injecter du carburant dans le dispositif formant passage d'aspiration (11, 15) en amont de la soupape d'admission (13).

13. Moteur à combustion interne selon la revendication 12, caractérisé en ce que le dispositif d'injection de carburant (18) est associé au premier passage d'aspiration (11) pour injecter du carburant dans celui-là même en aval du premier moyen formant soupape de commande (17).

14. Moteur à combustion interne selon la revendication 12 ou 13, caractérisé en ce qu'un mécanisme régulateur (60) est prévu pour commander le dispositif d'injection de carburant (18) afin d'injecter du carburant au moins pendant des conditions de fonctionnement à faible charge lorsque la soupape d'admission (13) et le deuxième moyen formant soupape de commande (17) sont dans leurs positions de fermeture.

15. Moteur à combustion interne selon la revendication 14, caractérisé en ce qu'une période d'injection de carburant du dispositif d'injection de carburants est ajustée en réaction à la charge du moteur.

16. Moteur à combustion interne selon l'une au moins des revendications 12 à 15, caractérisé en ce qu'un troisième passage d'aspiration (70) est prévu pour alimenter en air d'aspiration une partie d'injection de carburant (18a) dudit dispositif d'injection de carburant (18).

17. Moteur à combustion interne selon la revendication 16, caractérisé en ce que ledit troisième passage d'aspiration (70) est doté d'un orifice à son extrémité au niveau du dispositif d'injection de carburant (18).

18. Moteur à combustion interne selon la revendication 16 ou 17, caractérisé en ce qu'une quatrième soupape de commande (71) est prévue dans ledit troisième passage d'aspiration (70) pour commander l'écoulement d'air le traversant.

19. Moteur à combustion interne selon la revendication 18, caractérisé en ce que ladite quatrième soupape de commande (71) est actionnée par l'intermédiaire de l'arbre à came d'aspiration (7).

20. Moteur à combustion interne selon la revendication 18 ou 19, caractérisé en ce que ladite quatrième soupape de commande (71) est ouverte pendant une période correspondant à un angle de rotation prédéterminé de l'arbre-manivelle lorsque la soupape d'admission (13) est dans sa position fermée et avant que le deuxième moyen formant soupape de commande (17) soit dans sa position ouverte.

21. Moteur à combustion interne selon la revendication 18 ou 19, caractérisé en ce qu'une unité de commande connectée à un électro-aimant à noyau plongeur destiné à actionner la quatrième soupape de commande (71) est prévue pour commander la période d'ouverture et le chronométrage de ladite quatrième soupape de commande (71) conformément au fonctionnement du dispositif à injection de carburant (18).

22. Moteur à combustion interne selon l'une au moins des revendications 18 à 21, caractérisé en ce qu'une unité de commande de la température est prévue pour ouvrir ladite quatrième soupape de commande (71) lorsqu'une température de refroidissement du moteur est inférieure à une valeur préétablie et pour fermer ladite quatrième soupape de commande (71) lorsque ladite température de refroidissement est supérieure à ladite valeur préétablie.
